# EUROPEAN PATENT APPLICATION

(11) **EP 3 396 618 A1**
(43) Date of publication of application: **31.10.2018**
(21) Application number: 18169596.6
(22) Date of filing: 26.04.2018
(51) Int. Cl.: G06Q 50/00, G06F 3/048, G06K 9/00, G06Q 10/10, H04L 29/08

(54) **METHOD OF SHARING PROFILE IMAGE AND ELECTRONIC DEVICE IMPLEMENTING SAME**

(30) Priority: 27.04.2017 KR 20170054409
(71) Applicant: Samsung Electronics Co., Ltd., Gyeonggi-do 16677 (KR)
(72) Inventor: KWON, Yanghee, 16677 Suwon-si, (KR); RHEE, Injong, 16677 Suwon-si, (KR); CHANG, Minyoung, 16677 Suwon-si, (KR); HEO, Seunghyuck, 16677 Suwon-si, (KR)
(74) Representative: HGF Limited

(57) **Abstract**

Various embodiments of the present disclosure disclose a method and apparatus for sharing a profile image in an electronic device. An electronic device may include a display, a communication module comprising communication circuitry, memory, and a processor. The processor may be configured to identify a trigger related to a change of a profile image, to select an image for the profile image, to identify at least one target object for the sharing of the selected image as a profile image of the electronic device based on sharing information, and to share the selected image with the at least one target object as a profile image of the user of the electronic device.

## Description

### BACKGROUND

### Field

The present disclosure relates to a method of sharing a profile image and an electronic device supporting the same.

### DESCRIPTION OF RELATED ART

An electronic device stores a contact list including information for a call and communication. The contact list may include a list based on user information of users capable of a call and communication. The user information of each user may include a user name, a user image (e.g., a profile photo or profile image), a telephone number, a calling method, a group name, and ring tone information.

The user information may be shared with another user, for example, other users stored in the contact list. For example, when the first user of a first electronic device configures a profile image of the first user in a contact list, a second user who stores user information of the first user in a second electronic device may identify the profile image configured by the first user in a contact list within the second electronic device.

When the user of a contact list registers a profile image, in a conventional technology, one of selected images has to be selected or a corresponding image captured through photographing using an electronic device has to be registered as a profile image. Furthermore, in order to update a registered profile image with a recent image (e.g., photo) or another image, it is inconvenient for a user to manually edit the registered profile image in a contact list.

Furthermore, if a user does not register a profile image with an electronic device, the electronic device provides a region in which a profile image is provided in an empty (blank) state. Furthermore, an image that has been initially configured is always maintained unless a user changes a profile image. In order to update the profile image with a recent image, it is inconvenient for the user to manually change the profile image.

### SUMMARY

Various embodiments provide a method of sharing a profile image, wherein a profile image of the user of an electronic device can be automatically shared based on the relation between the user of the electronic device and other users stored in a contact list, and an electronic device supporting the same.

Various embodiments provide a method of sharing a profile image, wherein a profile image of the user of an electronic device can be automatically shared based on a communication history with other users, and an electronic device supporting the same.

Various embodiments provide a method of sharing an image selected in an electronic device with an application and another electronic device based on a user account related to the user of the electronic device, and an electronic device supporting the same.

An electronic device according to various embodiments of the present disclosure may include a display, a communication module comprising communication circuitry, memory, and a processor. The processor may be configured to identify a trigger related to a change of a profile image, to select an image for the profile image, to identify at least one target object for the sharing of the selected image as a profile image of the electronic device based on sharing information, and to share the selected image with the at least one target object as a profile image of the user of the electronic device.

A method of operating an electronic device according to various embodiments of the present disclosure may include identifying a trigger related to a change of a profile image, selecting an image for the profile image, identifying at least one target object for the sharing of the selected image as a profile image of the electronic device based on sharing information, and sharing the selected image with the at least one target object as a profile image of the user of the electronic device.

In accordance with the method of sharing a profile image and the electronic device supporting the same according to various embodiments, a profile image selected in the electronic device can be shared with at least one different electronic device as a profile image related to the user of the electronic device based on relation information of a contact list. In accordance with various embodiments, an image selected in the electronic device can be shared with an application (e.g., a plurality of applications installed in the electronic device) and another electronic device (e.g., a plurality of electronic devices (or multiple devices) grouped as a user account) based on a user account related to the user of the electronic device.

Accordingly, various embodiments address inconvenience that a user has to directly register and share a profile image. In accordance with various embodiments, a differentiated profile image can be shared because a different profile image is provided to each user (or each group) based on the relation between the user of the electronic device and a target user. In accordance with various embodiments, a target user can intuitively recognize a user and develop a bond of sympathy with the user because a profile image of the user of the electronic device is provided as a common image between the target user and the user.

### BRIEF DESCRIPTION OF THE DRAWINGS

The above and other aspects, features and advantages of certain embodiments of the present disclosure will be more apparent from the following detailed description, taken in conjunction with the accompanying drawings, in which:
FIG. 1 is a block diagram illustrating an electronic device within a network environment according to various embodiments;
FIG. 2 is a block diagram illustrating a display device according to various embodiments;
FIG. 3 is a block diagram illustrating an example of a function processing module in the electronic device according to various embodiments;
FIG. 4 is a diagram illustrating an example in which a profile image is shared between the electronic device and an external device according to various embodiments;
FIG. 5 is a flowchart illustrating an operation of the electronic device according to various embodiments;
FIG. 6 is a flowchart illustrating an operation of sharing a profile image in the electronic device according to various embodiments;
FIG. 7 is a diagram illustrating an operation of sharing a profile image in the electronic device according to various embodiments;
FIG. 8 is a flowchart illustrating an operation of sharing a profile image in the electronic device according to various embodiments;
FIG. 9 is a illustrating showing an operation of sharing a profile image based on relation information in the electronic device according to various embodiments;
FIG. 10 is a flowchart illustrating an operation of configuring a profile image related to an external device in the electronic device according to various embodiments;
FIG. 11 is a flowchart illustrating an operation of configuring a profile image related to an external device in the electronic device according to various embodiments;
FIGS. 12A and 12B are diagrams illustrating examples of an operation of sharing a profile image in the electronic device according to various embodiments;
FIG. 13 is a diagram illustrating an example of an operation of sharing a profile image in the electronic device according to various embodiments;
FIGS. 14A, 14B and 14C are diagrams illustrating examples of an operation of sharing a profile image in the electronic device according to various embodiments;
FIGS. 15A, 15B and 15C are diagrams illustrating examples of an operation of sharing a profile image in the electronic device according to various embodiments;
FIG. 16 is a diagram illustrating an example of an operation of sharing a profile image in the electronic device according to various embodiments;
FIG. 17 is a diagram illustrating an example of an operation of sharing a profile image based on an account in the electronic device according to various embodiments;
FIG. 18 is a flowchart illustrating an operation of sharing a profile image in the electronic device according to various embodiments;
FIG. 19 is a flowchart illustrating an operation of sharing a profile image based on an account in the electronic device according to various embodiments;
FIG. 20 is a diagram illustrating an example of a screen of a user interface related to a user account in the electronic device according to various embodiments; and
FIG. 21 is a diagram illustrating an example of a screen of the user interface related to a user account in the electronic device according to various embodiments.

### DETAILED DESCRIPTION

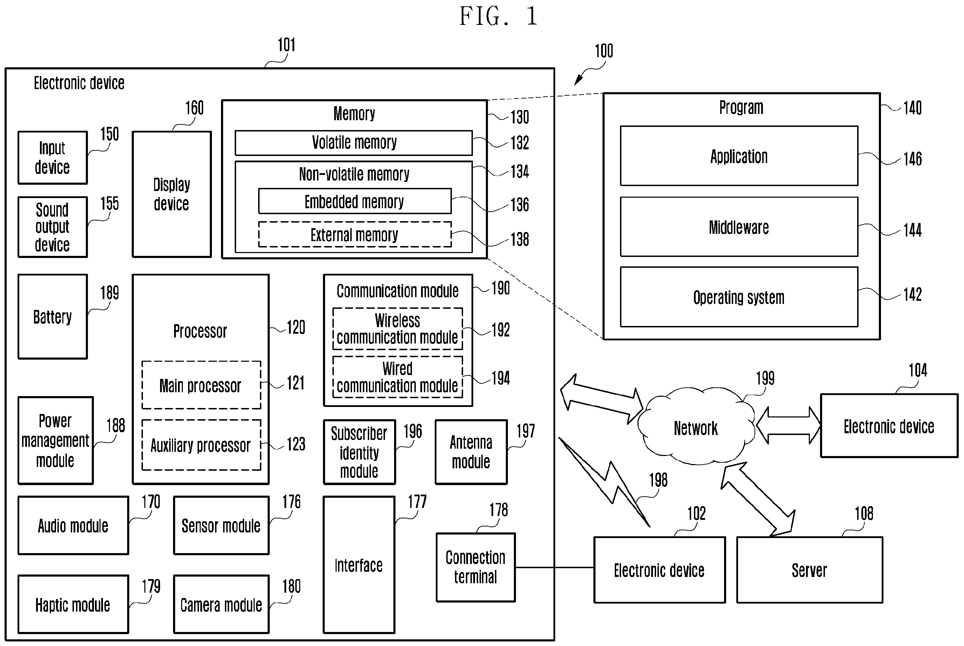

Fig. 1 is a block diagram illustrating an electronic device 101 in a network environment 100 according to various embodiments.

Referring to Fig. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor (e.g., including processing circuitry) 120, memory 130, an input device (e.g., including input circuitry) 150, a sound output device 155, a display device 160, an audio module (e.g., including audio circuitry) 170, a sensor module 176, an interface (e.g., including interface circuitry) 177, a haptic module (e.g., including haptic circuitry) 179, a camera module 180, a power management module (e.g., including power management circuitry) 188, a battery 189, a communication module (e.g., including communication circuitry) 190, a subscriber identification module (SIM) 196, and/or an antenna module 197. In some embodiments, at least one (e.g., the display device 160 or the camera module 180) of the components may be omitted from the electronic device 101, or one or more other components may be added in the electronic device 101. In some embodiments, some of the components may be implemented as single integrated circuitry. For example, the sensor module 176 (e.g., a fingerprint sensor, an iris sensor, or an illuminance sensor) may be implemented as embedded in the display device 160 (e.g., a display).

The processor 120 may include various processing circuitry and execute, for example, software (e.g., a program 140) to control at least one other component (e.g., a hardware or software component) of the electronic device 101 coupled with the processor 120, and may perform various data processing or computation. According to an example embodiment, as at least part of the data processing or computation, the processor 120 may load a command or data received from another component (e.g., the sensor module 176 or the communication module 190) in volatile memory 132, process the command or the data stored in the volatile memory 132, and store resulting data in non-volatile memory 134. According to an embodiment, the processor 120 may include various processing circuitry, such as, for example, and without limitation, a main processor 121 (e.g., a central processing unit (CPU) or an application processor (AP)), and an auxiliary processor 123 (e.g., a graphics processing unit (GPU), an image signal processor (ISP), a sensor hub processor, and/or a communication processor (CP), or the like) that is operable independently from, or in conjunction with, the main processor 121. Additionally or alternatively, the auxiliary processor 123 may be adapted to consume less power than the main processor 121, or to be specific to a specified function. The auxiliary processor 123 may be implemented as separate from, or as part of the main processor 121.

The auxiliary processor 123 may include various processing circuitry and control at least some of functions or states related to at least one component (e.g., the display device 160, the sensor module 176, and/or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 and/or the non-volatile memory 134.

The program 140 may be stored in the memory 130 as software, and may include, for example, an operating system (OS) 142, middleware 144, and/or an application 146.

The input device 150 may include various input circuitry and receive a command or data to be used by other component (e.g., the processor 120) of the electronic device 101, from the outside (e.g., a user) of the electronic device 101. The input device 150 may include various input circuitry, such as, for example, and without limitation, a microphone, a mouse, and/or a keyboard, or the like.

The sound output device 155 may include various sound output circuitry and output sound signals to the outside of the electronic device 101. The sound output device 155 may include various sound output circuitry, such as, for example, and without limitation, a speaker and/or a receiver. The speaker may be used for general purposes, such as playing multimedia or playing record, and the receiver may be used for an incoming calls. According to an embodiment, the receiver may be implemented as separate from, or as part of the speaker.

The display device 160 may visually provide information to the outside (e.g., a user) of the electronic device 101. The display device 160 may include, for example, a display, a hologram device, or a projector, or the like, but is not limited thereto, and control circuitry to control a corresponding one of the display, hologram device, and projector. According to an embodiment, the display device 160 may include touch circuitry adapted to detect a touch, or sensor circuitry (e.g., a pressure sensor) adapted to measure the intensity of force incurred by the touch.

The audio module 170 may include various audio circuitry to convert a sound into an electrical signal and vice versa. According to an embodiment, the audio module 170 may obtain the sound via the input device 150, or output the sound via the sound output device 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include various sensors, such as, for example, and without limitation, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, and/or an illuminance sensor.

The interface 177 may include various interface circuitry and support one or more specified protocols to be used for the electronic device 101 to be coupled with the external electronic device (e.g., the electronic device 102) directly (e.g., wiredly) or wirelessly. According to an embodiment, the interface 177 may include various interface circuitry, such as, for example, and without limitation, a high definition multimedia interface (HDMI), a universal serial bus (USB) interface, a secure digital (SD) card interface, and/or an audio interface, or the like.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector),

The haptic module 179 may include various circuitry to convert an electrical signal into a mechanical stimulus (e.g., a vibration or a movement) or electrical stimulus which may be recognized by a user via his tactile sensation or kinesthetic sensation. According to an embodiment, the haptic module 179 may include various haptic circuitry, such as, for example, and without limitation, a motor, a piezoelectric element, and/or an electric stimulator, or the like.

The camera module 180 may capture a still image or moving images. According to an embodiment, the camera module 180 may include one or more lenses, image sensors, image signal processors, or flashes.

The power management module 188 may manage power supplied to the electronic device 101. According to an example embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may include various communication circuitry and support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth™, wireless-fidelity (Wi-Fi) direct, or infrared data association (IrDA)) or the second network 199 (e.g., a long-range communication network, such as a cellular network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The antenna module 197 may transmit or receive a signal or power to or from the outside (e.g., the external electronic device) of the electronic device 101. According to an embodiment, the antenna module 197 may include one or more antennas, and, therefrom, at least one antenna appropriate for a communication scheme used in the communication network, such as the first network 198 or the second network 199, may be selected, for example, by the communication module 190 (e.g., the wireless communication module 192). The signal or the power may then be transmitted or received between the communication module 190 and the external electronic device via the selected at least one antenna.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 and 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, or client-server computing technology may be used, for example.

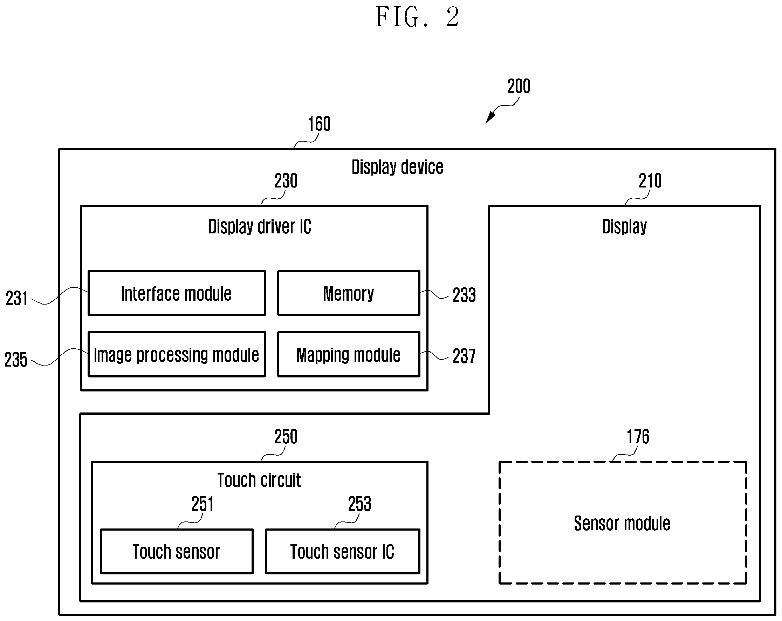

Fig. 2 is a block diagram 200 illustrating the display device 160 according to various embodiments. Referring to Fig. 2, the display device 160 may include a display 210 and a display driver integrated circuit (DDI) 230 to control the display 210. The DDI 230 may include an interface module (e.g., including interface circuitry) 231, memory 233 (e.g., buffer memory), an image processing module (e.g., including image processing circuitry) 235, and/or a mapping module (e.g., including mapping circuitry) 237. The DDI 230 may receive image information that contains image data or an image control signal corresponding to a command to control the image data from another component of the electronic device 101 via the interface module 231. For example, according to an embodiment, the image information may be received from the processor 120 (e.g., the main processor 121 (e.g., an application processor)) or the auxiliary processor 123 (e.g., a graphics processing unit) operated independently from the function of the main processor 121. The DDI 230 may communicate, for example, with touch circuitry 150 or the sensor module 176 via the interface module 231. The DDI 230 may also store at least part of the received image information in the memory 233, for example, on a frame by frame basis.

The image processing module 235 may include various image processing circuitry to perform pre-processing or post-processing (e.g., adjustment of resolution, brightness, or size) with respect to at least part of the image data. According to an embodiment, the pre-processing or post-processing may be performed, for example, based at least in part on one or more characteristics of the image data or one or more characteristics of the display 210.

The mapping module 237 may include various mapping circuitry to generate a voltage value or a current value corresponding to the image data pre-processed or post-processed by the image processing module 235. According to an embodiment, the generating of the voltage value or current value may be performed, for example, based at least in part on one or more attributes of the pixels (e.g., an array, such as an RGB stripe or a pentile structure, of the pixels, or the size of each subpixel). At least some pixels of the display 210 may be driven, for example, based at least in part on the voltage value or the current value such that visual information (e.g., a text, an image, or an icon) corresponding to the image data may be displayed via the display 210.

According to an embodiment, the display device 160 may further include touch circuitry 250. The touch circuitry 250 may include a touch sensor 251 and a touch sensor IC 253 to control the touch sensor 251. The touch sensor IC 253 may control the touch sensor 251 to sense a touch input or a hovering input with respect to a certain position on the display 210. To achieve this, for example, the touch sensor 251 may detect (e.g., measure) a change in a signal (e.g., a voltage, a quantity of light, a resistance, or a quantity of one or more electric charges) corresponding to the certain position on the display 210. The touch circuitry 250 may provide input information (e.g., a position, an area, a pressure, or a time) indicative of the touch input or the hovering input detected via the touch sensor 251 to the processor 120. According to an embodiment, at least part (e.g., the touch sensor IC 253) of the touch circuitry 250 may be formed as part of the display 210 or the DDI 230, or as part of another component (e.g., the auxiliary processor 123) disposed outside the display device 160.

According to an embodiment, the display device 160 may further include at least one sensor (e.g., a fingerprint sensor, an iris sensor, a pressure sensor, or an illuminance sensor) of the sensor module 176 or a control circuit for the at least one sensor. In such a case, the at least one sensor or the control circuit for the at least one sensor may be embedded in one portion of a component (e.g., the display 210, the DDI 230, or the touch circuitry 150)) of the display device 160. For example, when the sensor module 176 embedded in the display device 160 includes a biometric sensor (e.g., a fingerprint sensor), the biometric sensor may obtain biometric information (e.g., a fingerprint image) corresponding to a touch input received via a portion of the display 210. As another example, when the sensor module 176 embedded in the display device 160 includes a pressure sensor, the pressure sensor may obtain pressure information corresponding to a touch input received via a partial or whole area of the display 210. According to an embodiment, the touch sensor 251 or the sensor module 176 may be disposed between pixels in a pixel layer of the display 210, or over or under the pixel layer.

The electronic device according to various embodiments may be one of various types of electronic devices. The electronic devices may include, for example, and without limitation, a portable communication device (e.g., a smart phone), a computer device, a portable multimedia device, a portable medical device, a camera, a wearable device, and/or a home appliance, or the like. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, or any combinations thereof, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., Play Store™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

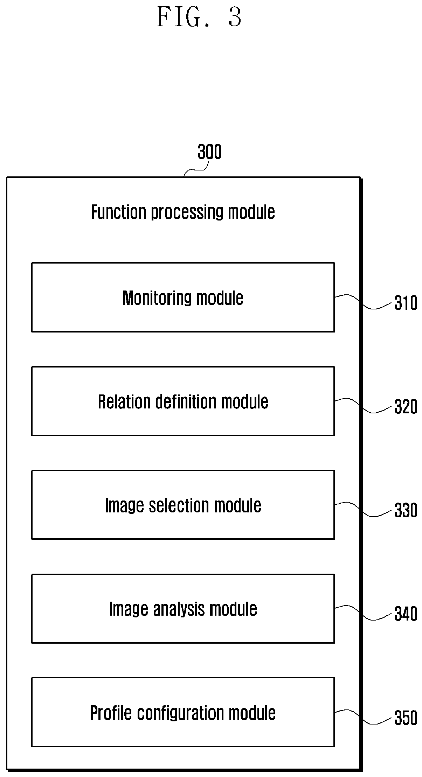

FIG. 3 is a block diagram illustrating an example of a function processing module in the electronic device according to various embodiments.

FIG. 3 illustrates an example of the function processing module 300 of the electronic device 101 configured to execute (or process) a function related to the sharing of a profile image (or profile photo) in various embodiments. In various embodiments, the function processing module 300 may be included in a processor (e.g., the processor 120 of FIG. 1) including processing circuitry as a hardware module or may be included as a software module or a combination thereof.

Referring to FIG. 3, the function processing module 300 according to various embodiments may include, for example, a monitoring module (e.g., including processing circuitry and/or program elements) 310, a relation definition module (e.g., including processing circuitry and/or program elements) 320, an image selection module (e.g., including processing circuitry and/or program elements) 330, an image analysis module (e.g., including processing circuitry and/or program elements) 340 and/or a profile configuration module (e.g., including processing circuitry and/or program elements) 350.

In an example embodiment, the monitoring module 310 may monitor whether there is a trigger for sharing a profile image of a user. In an example embodiment, the monitoring module 310 may monitor at least one operation of a change in a profile image of a user stored in the electronic device 101, the storing or modification of an image in the gallery of the electronic device 101, the execution of selfie (or photo) photographing, the transmission of an image through direct (or wired) communication or wireless communication, the sharing of a profile image by a user and a request to change a profile image of a user account. In an example embodiment, the monitoring module 310 may determine the detection of at least one operation to be a trigger for sharing a profile image in response to the detection.

In an example embodiment, the relation definition module 320 may define the relation between the user of the electronic device 101 and the user of another electronic device based on relation information stored in the contract list of the electronic device 101. In an example embodiment, the relation information may be defined as first relation information (e.g., a family relation), second relation information (e.g., a friend relation) or third relation information (e.g., a peer relation), for example. In an example embodiment, the relation information is meaningfully configured by the user of the electronic device 101, and may be configured in association (or a mapping relation) with user information (or profile information) (e.g., a name, a nickname, a telephone number and/or an image (e.g., a profile image)) for each user in the contract list of the electronic device 101. For example, the user may establish the relation with a first user as a "family relation" and establish the relation with a second user as a "friend relation" in the contact list. In an example embodiment, the relation information may be configured based on the user of the electronic device 101. One piece of relation information may include a plurality of users to form a group (e.g., a family group, a friend group or a peer group). In an example embodiment, the relation definition module 320 may define the relation between a user and a corresponding user based on a communication history with another electronic device.

In an example embodiment, the relation definition module 320 may determine (or identify) user information including object information (e.g., a profile image) corresponding to an object (e.g., a user face) analyzed by the image analysis module 340 in the contact list. In accordance with an embodiment, the relation definition module 320 may identify at least one piece of user information, including a profile image (e.g., a user face) corresponding to an analyzed object (e.g., user face), in the user information of the contact list. In an example embodiment, the relation definition module 320 may identify a relation with the user based on relation information configured in at least one piece of identified user information.

In an example embodiment, if an object in a target image is an object related to the user (e.g., a user face based on selfie photographing), the relation definition module 320 may identify the target image as first relation information. In an example embodiment, if an object in a target image is an object related to another user (e.g., a family face, a friend face or a peer face) including the user or not including the user, the relation definition module 320 may identify the target image as first relation information, second relation information or third relation information in accordance with the object of the target image. In an example embodiment, the identification of relation information for an object related to another user may be performed through a comparison with an object (e.g., a user face) analyzed in information of each user of the contact list.

In an example embodiment, the image selection module 330 may receive a target image corresponding to a trigger for sharing a profile image. In an example embodiment, when a profile image stored in the electronic device 101 is changed, the image selection module 330 may receive the changed profile image as a target image. In an example embodiment, when an image is stored in the gallery, the image selection module 330 may receive the stored image as a target image. In an example embodiment, when selfie photographing is executed, the image selection module 330 may receive a selfie-photographed image (e.g., a selfie image) as a target image. In an example embodiment, when an image is transmitted to the outside (e.g., another electronic device or the server) through communication (e.g., direct communication or wireless communication), the image selection module 330 may receive the transmitted image as a target image. In an example embodiment, when a request to share a profile image is made by a user, the image selection module 330 may receive the sharing-requested image as a target image.

In an example embodiment, the image analysis module 340 may analyze a target image selected by the image selection module 330. In an example embodiment, the image analysis module 340 may analyze one or more objects in a target image. In various embodiments, an object may include a person's face shape. In an example embodiment, the image analysis module 340 may recognize an object through image processing at least based on feature point extraction, face recognition (or facial recognition) or learning (e.g., machine learning) in a target image. For example, the image analysis module 340 may recognize the face of the user or the face of another user in a target image. In accordance with an embodiment, the image analysis module 340 may analyze a profile image configured as user information of the contact list.

In an example embodiment, the profile configuration module 350 may share a profile image with an external device (e.g., another electronic device or the server). In an example embodiment, the profile configuration module 340 may share a target image, selected by the image selection module 330, with at least one external device based on a relation defined in the relation definition module 320. In an example embodiment, the profile configuration module 350 may transmit a target image to an external device using a communication module (e.g., the communication module 190 of FIG. 1), and may request the corresponding external device to change (or configure) a profile image related to the user of the electronic device 101 based on the target image. In an example embodiment, the profile configuration module 350 may change (or configure) a profile image related to the user of an external device based on an image received from the external device in response to the reception of a request to change (or configure) the profile image related to the user of the external device from the external device.

In an example embodiment, the profile configuration module 350 may share a profile image related to a user account with an application of the electronic device 101 or at least one different device connected to the electronic device 101 based on the user account. In accordance with an embodiment, the profile configuration module 350 may share an image selected in the electronic device with an application (e.g., a plurality of applications installed in the electronic device 101) and another electronic device (e.g., a plurality of electronic devices (or multiple devices) grouped as a user account) based on a user account related to the user of the electronic device 101.

In accordance with various embodiments, the profile configuration module 350 may identify at least one target object for profile image sharing as a selected image based on sharing information, such as relation information of the contact list or user account information. In various embodiments, the target object may indicate at least one of at least one external device identified based on relation information, at least one application identified based on user account information and at least one external device identified based on user account information, for example.

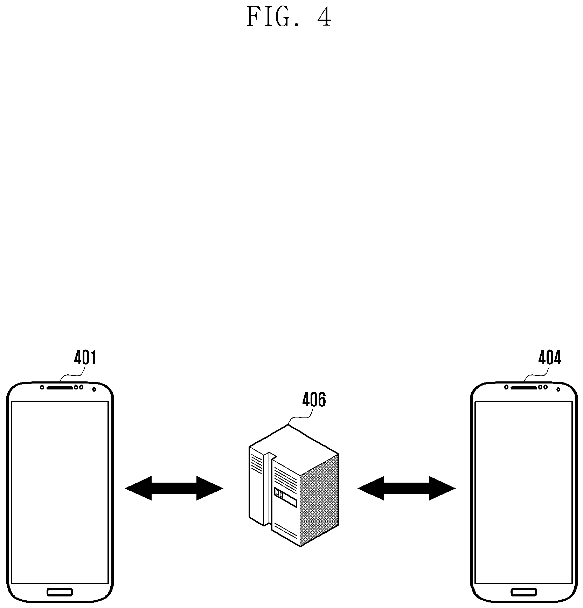

FIG. 4 is a diagram illustrating an example in which a profile image is shared between the electronic device and an external device according to various embodiments.

Referring to FIG. 4, an electronic device 401 and an external device 404 (e.g., the electronic device 104 of FIG. 1) may communicate with a server 406 over a network. In an example embodiment, the network may include the network 199 of FIG. 1. The electronic device 401 and the external device 404 may include part of or the entire electronic device 101 of FIG. 1.

The electronic device 401 may have stored a contact list, including user information (or profile information) of the user of the electronic device 401, in memory. The memory may include part of or the entire memory 130 of FIG. 1.

In an example embodiment, the electronic device 401 may update user information (e.g., a profile image) of the user to be shared with the user of the external device 404. In an example embodiment, the electronic device 401 may receive at least one of images, stored in the memory of the electronic device 401, as a profile image. In an example embodiment, the electronic device 401 may receive at least one of a stored image, an image received (or downloaded) through an application capable of communication, such as a message (e.g., SMS or MMS), a messenger (e.g., SNS) or mail, and an image shared with the external device 404 through a function, such as Bluetooth or Wi-Fi, as a profile image.

In an example embodiment, the electronic device 401 may identify relation information for identifying the external device 404 for the sharing of a selected image as a profile image of the user of the electronic device 401. In accordance with an embodiment, the electronic device 401 may identify relation information for identifying the user of the external device 404 for the sharing of a selected image as a profile image of the electronic device 401 (or the user of the electronic device 401). In accordance with an embodiment, the electronic device 401 may identify relation information for sharing a profile image at least based on a relation with the user of the electronic device 401 or the existing communication history. The identification of relation information in the electronic device 401 according to various embodiments is described in detail with reference to a drawing to be described later.

In an example embodiment, the electronic device 401 may identify relation information through a process of identifying the relation information. In an example embodiment, members stored in the contact list of the electronic device 401 may include the user of the external electronic device 404. The electronic device 401 may share a selected image with members belonging to member stored in the contact list and having identified relation information as a profile image of the user of the electronic device 401.

In an example embodiment, the electronic device 401 may share a profile image based on a user account. The sharing of a profile image based on a user account in the electronic device 401 according to various embodiments is described in detail with reference to a drawing to be described later.

In an example embodiment, the server 406 may have stored the contact lists of the electronic device 401 and the external device 404 in the database (not shown) of the server 406. In an example embodiment, the server 460 may have stored the user accounts of the electronic device 401 and the external device 404 and a variety of types of information (e.g., account information) related to the user accounts in the database (not shown) of the server 406.

In an example embodiment, when a request to share a selected image as a profile image is received from the electronic device 401, the server 406 may configure a profile image of user information related to the user of the electronic device 401 in the contact list of at least one external electronic device 404 that is stored in the database and that is related to the electronic device 401 as the selected image in response to the received request. In an example embodiment, the server 406 may transmit profile information of the electronic device 401 (or an updated contact list related to at least one external device 404) to the external device 404 in which user information has been configured in response to the configuration (e.g., update) of user information (e.g., a profile image) of the electronic device 401.

In an example embodiment, when the sharing of a selected image is requested by the electronic device 401 as a profile image of a user account, the server 406 may configure a profile image of the user account related to the electronic device 401 and stored in the database as the selected image.

In an example embodiment, the external device 404 may receive changed user information (e.g., a profile image) of the electronic device 401 from the server 406. The external device 404 may update a contact list stored in the memory of the external device 404, including received user information. In another embodiment, the external device 404 may receive the contact list of the external device 404, including changed user information of the electronic device 401, from the server 406. The external device 401 may store the contact list of the external device 404 received from the server 406.

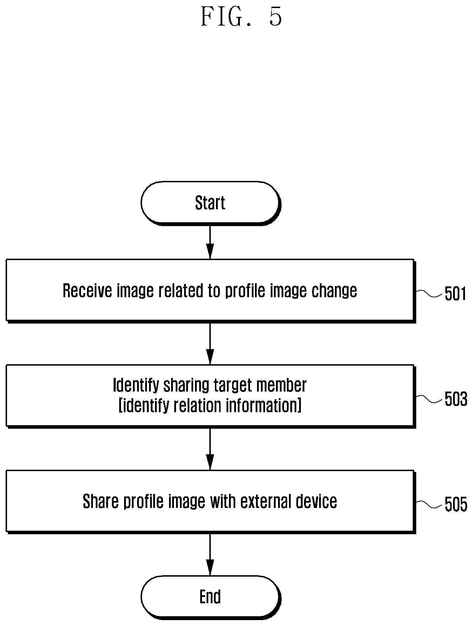

FIG. 5 is a flowchart illustrating an operation of an electronic device according to various embodiments.

Referring to FIG. 5, at operation 501, the processor 120 (e.g., at least one processor including processing circuitry) (or the function processing module 300 of FIG. 3) of the electronic device 101 may receive an image related to a profile image change. In accordance with an embodiment, the processor 120 may receive at least one of a plurality of images stored in the memory 130 of the electronic device 101.

In various embodiments, the plurality of images may include an image received (or downloaded) through an application capable of communication, such as a message (e.g., SMS or MMS), a messenger (e.g., SNS) or mail, or an image shared by an external device through a direct (e.g., a wired) communication or wireless communication (e.g., Bluetooth or Wi-Fi) function, in addition to an image stored in the memory of the electronic device 401. In accordance with an embodiment, the plurality of images may include, for example, a user photo (e.g., a user photo photographed by a selfie function), a photo photographed along with at least one friend (or peer) or a travel photo.

In various embodiments, image selection may be performed at least based on selection by a user (e.g., a change of a profile image of the electronic device 101 by a user), the update (e.g., addition and/or deletion) of images stored in the memory 130 of the electronic device 101, the transmission (or upload) of an image to an external device (e.g., a counterpart electronic device) during communication (e.g., communication using an SNS application), the execution of selfie photographing by a user, the detection of a cycle (e.g., time (e.g., a unit such as a hour, day, week or month) according to a user configuration) for detecting the configuration of a profile image change, and the update (e.g., editing and/or addition) of a contact list. For example, the processor 210 may perform an operation of selecting an image for a profile image change (or profile information update) in response to the detection of a trigger for image selection (e.g., a trigger for sharing a profile image). In various embodiments, a trigger condition for image selection is not limited to the above contents, and may include various operations related to the configuration of a profile image change as triggers.

At operation 503, the processor 120 may identify a sharing target member. In accordance with an embodiment, the processor 120 may identify a sharing target member based on relation information related to the selected image in response to a trigger. In an example embodiment, the processor 120 may identify at least one sharing target member (e.g., person or group) based on user information corresponding to identified relation information in a contact list.

In accordance with an embodiment, the processor 120 may recognize an object by analyzing the selected image and identify relation information using the object. In accordance with an embodiment, the processor 120 may identify whether the analyzed object is an object related to the user or an object related to another user. For example, if the analyzed object is an object related to the user, the processor 120 may identify the relation information related to the image as first relation information (e.g., a family relation). For another example, if the analyzed object is an object related to another user, the processor 120 may obtain user information, including a profile image related to the object, from user information (or profile information) related to another user of a contact list, and may identify the relation information related to the image as first relation information (e.g., a family relation), second relation information (e.g., a friend relation) or third relation information (e.g., a peer relation) based on relation information configured in the obtained user information. A process of identifying the relation information according to various embodiments is described in detail with reference to a drawing to be described later.

At operation 505, the processor 120 may share the profile image with an external device corresponding to a determined member. In an example embodiment, the processor 120 may identify at least one member (e.g., a member within the contact list) having relation information identified based on a result of the identification of the relation information. The processor 120 may include an operation of transmitting the selected image to the identified member and requesting the selected image to be changed as a profile image of the user of the electronic device 101.

In accordance with various embodiments, the processor 120 may identify relation information related to a selected first image (e.g., a selfie photographing image) as the first relation information (e.g., a family relation). In this case, the processor 120 may identify a member (e.g., a family member) that belongs to members registered with the contract list of the electronic device 101 and that corresponds to the first relation information. For example, the member may include a family member depending on the first relation information. The processor 120 may share the selected image with family members as a profile image of the user of the electronic device 101, so an external device corresponding to the family members change and configure the profile image of the user of the electronic device 101 as the selected image.

In accordance with various embodiments, the processor 120 may identify relation information related to a selected second image (e.g., an image including at least one different face) as first relation information (e.g., a family relation), second relation information (e.g., a friend relation) or third relation information (e.g., a peer relation). For example, if the face of a family member is included in the second image, the processor 120 may identify relation information related to the second image as the first relation information. If the face of a friend is included in the second image, the processor 120 may identify relation information related to the second image as the second relation information. If the face of a peer is included in the second image, the processor 120 may identify relation information related to the second image as the third relation information.

The processor 120 may identify a member (e.g., a group to which the user of a different face belongs and at least one member of the group) that belongs to members registered with the contract list of the electronic device 101 and that corresponds to identified relation information. For example, the member may include a member of a group, such as a family group, a friend group or a peer group, depending on relation information. The processor 120 may sense the face of at least one different user in a selected image through a scheme, such as face detection, and may identify the sensed face of the different user. The processor 120 may share a selected image with the members of a corresponding group as a profile image of the user of the electronic device 101, so the profile image of the user of the electronic device 101 is changed and configured as the selected image in a corresponding external device.

In accordance with an embodiment, the processor 120 may share (e.g., a first sharing method) a profile image with at least one member corresponding to the face of another user identified in a selected image. In accordance with another embodiment, the processor 120 may share (e.g., a second sharing method) a profile image with a plurality of (or all the) members of a group that corresponds to the face of another user identified in a selected image and to which at least one member belongs. In various embodiments, the sharing of a profile image using the first sharing method or the second sharing method may be selected based on the configuration of the electronic device 101 by the user.

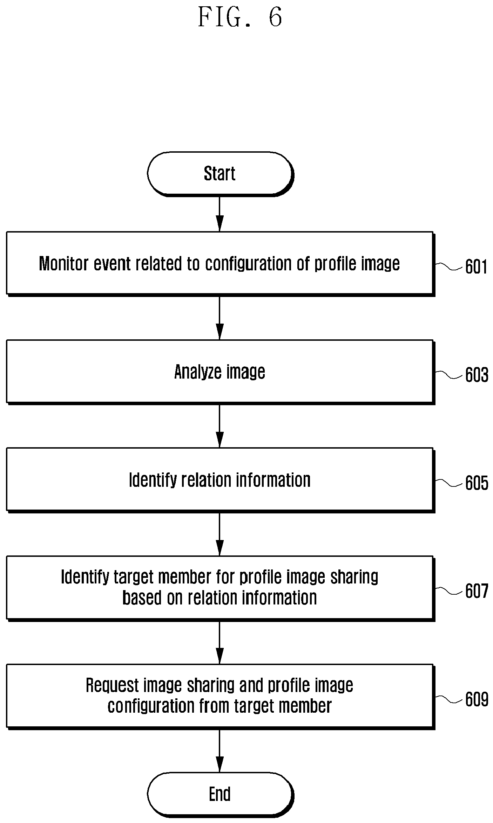

FIG. 6 is a flowchart illustrating an operation of sharing a profile image in the electronic device according to various embodiments.

Referring to FIG. 6, at operation 601, the processor 120 of the electronic device 101 may monitor an event related to the configuration of a profile image (or profile photo). For example, the processor 120 may identify whether there is a trigger for sharing a profile image of the user of the electronic device 101.

In an example embodiment, the processor 120 may monitor at least one operation of a change of a profile image of the user stored in the electronic device 101, the storage or modification of an image in the gallery of the electronic device 101, the execution of selfie (or photo) photographing, the transmission of an image through direct (or wired) communication or wireless communication, and a profile image sharing request from the user. In an example embodiment, the processor 120 may identify at least one operation as a trigger for sharing a profile image in response to the detection of the at least one operation.

At operation 603, the processor 120 may analyze a target image (target image) in response to the detection of the event related to the profile image configuration.

In an example embodiment, the processor 120 may identify a selected image as a target image for profile image sharing in response to a change of a profile image of the user of the electronic device 101, the storage of an image in the gallery, selfie photographing, the transmission of an image to the outside (e.g., another electronic device or the server) through communication (e.g., direct communication or wireless communication) or a profile image sharing request from the user. In an example embodiment, the processor 120 may identify one or more objects (e.g., a person's face) by performing an image analysis operation on the identified target image. In an example embodiment, the processor 120 may recognize an object (e.g., the face of the user or the face of another user) through image processing at least based on feature point extraction, face recognition (or facial recognition) or learning (e.g., machine learning) in the target image.

At operation 605, the processor 120 may identify relation information. In an example embodiment, the relation information is meaningfully configured by the user of the electronic device 101, and may be configured in association (or a mapping relation) with user information (or profile information) (e.g., a name, a nickname, a telephone number and/or an image (e.g., a profile image)) of each user in the contract list of the electronic device 101.

In an example embodiment, if an object in a target image is an object related to the user (e.g., a user face according to selfie photographing), the processor 120 may identify the target image as the first relation information. In an example embodiment, if an object in a target image is an object related to another user (e.g., a family face, a friend face or a peer face), including or not including the user, the relation definition module 320 may identify the target image as the first relation information, the second relation information or the third relation information based on the object of the target image.

In an example embodiment, the processor 120 may determine (or identify) at least one piece of user information, including a profile image (e.g., a user face) corresponding to an analyzed object (e.g., a user face), in user information of the contact list. In an example embodiment, the processor 120 may identify a relation with the user based on relation information configured in the determined at least one piece of user information. In an example embodiment, the identification of relation information about an object related to another user may be performed through a comparison with an object (e.g., a user face) analyzed in each of pieces of user information of the contact list.

At operation 607, the processor 120 may identify a target member (e.g., a person or group) for profile image sharing based on the relation information.

In an example embodiment, the processor 120 may identify a member that belongs to members registered with the contact list and that corresponds to the corresponding relation information based on the first relation information, the second relation information or the third relation information related to the target image. In an example embodiment, the processor 120 may identify the corresponding member of a target image as a target member based on the configuration of the electronic device 101 or may identify a plurality of (or all the) members of a group to which the corresponding member of a target image belongs as a target member.

At operation 609, the processor 120 may request a profile image configuration by sharing an image with the identified target member. In an example embodiment, the processor 120 may transmit a target image to an external device corresponding to the identified target member, and may request a profile image related to the user of the electronic device 101 to be changed (or configured) based on the target image.

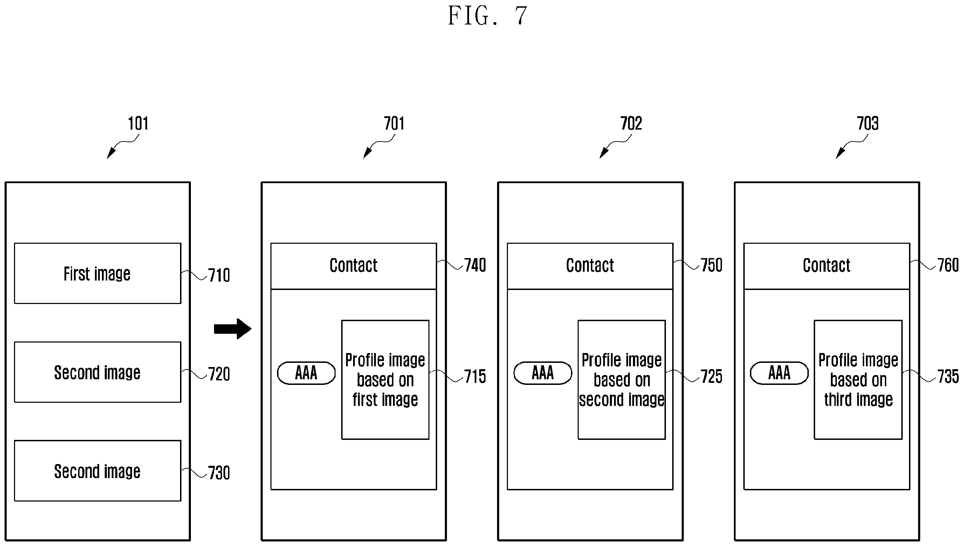

FIG. 7 is a diagram illustrating an operation of sharing a profile image in the electronic device according to various embodiments.

FIG. 7 illustrates an example in which a first image 710 (e.g., a selfie photo), a second image 720 (e.g., a photo including a friend), and a third image 730 (e.g., a travel photo) have been stored in the electronic device 101. Furthermore, FIG. 7 may illustrate an example in which pieces of user information (e.g., telephone numbers) corresponding to the users of an first external device 701, a second external device 702 and a third external device 703, respectively, have been stored in the contract list of the electronic device 101. In an example embodiment, the relation between the user (e.g., AAA) of the electronic device 101 and the user (e.g., BBB) of the first external device 701 may have first relation information (e.g., a family relation), and the relation between the user of the electronic device 101 and the user (e.g., CCC) of the second external device 702 may have second relation information (e.g., a friend relation). In an example embodiment, the electronic device 101 and the third external device 703 may have a relation in which the electronic device 101 transmits (or shares) an image (e.g., the third image 730) to the third external device 703.

In an example embodiment, when a trigger for sharing a profile image is sensed based on the first image 710, the electronic device 101 may share the first image 710 with at least one member having a first relation (e.g., a family relation) with the user of the electronic device 101 as the profile image. For example, the electronic device 101 may transmit the first image 710 to the first external device 701 having the first relation information and request a profile image configuration from the first external device 701. The first external device 701 may change the profile image related to the user (e.g., AAA) of the electronic device 101 into the received first image 710 in the contact list 740 of the first external device 701. For example, the first external device 701 may configure a profile image 715 using the first image 710 shared with the electronic device 101 by substituting the existing profile image related to the user (e.g., AAA) of the electronic device 101 with the profile image 715.

In an example embodiment, when a trigger for sharing a profile image is sensed based on the second image 720, the electronic device 101 may share the second image 720 with at least one member having a second relation (e.g., a friend relation) with the user of the electronic device 101 as the profile image. For example, the electronic device 101 may transmit the second image 720 to the second external device 702 having the second relation information and request a profile image configuration from the second external device 702. The second external device 702 may change the profile image related to the user (e.g., AAA) of the electronic device 101 into the received second image 720 in the contact list 750 of the second external device 702. For example, the second external device 702 may configure a profile image 725 using the second image 720 shared with the electronic device 101 by substituting the existing profile image related to the user (e.g., AAA) of the electronic device 101 with the profile image 725.

In an example embodiment, when the third image 730 is shared with (or transmitted to) the third external device 703 during communication (e.g., messenger-based chatting), the electronic device 101 may request a profile image configuration based on the shared third image 730 from the third external device 703. The third external device 703 may change a profile image related to the user (e.g., AAA) of the electronic device 101 into the received third image 730 in the contact list 760 of the third external device 703. For example, the third external device 703 may configure a profile image 735 using the second image 730 shared with the electronic device 101 by substituting the existing profile image related to the user (e.g., AAA) of the electronic device 101 with the profile image 735.

In accordance with an embodiment, if the electronic device 101 has a communication history of sharing an image with the third external device 703 (e.g., if the electronic device 101 has fourth relation information), it may request a profile image configuration from the third external device 703. In accordance with an embodiment, when a third image is shared with the third external device 703 during communication, the electronic device 101 may analyze relation information between the user of the electronic device 101 and the user (e.g., DDD) of the third external device 703, and may request a profile image configuration based on the third image 730 from at least one member having the corresponding relation information.

As described above, in accordance with various embodiments, the electronic device 101 can analyze a relation with a user using an image (or an object within the image) and user information of the contact list, and can automatically share a more proper profile image with each external device (or each user) based on a relation with the user. For example, a selfie image (e.g., best photo) within the electronic device 101 can be automatically configured as a profile image with respect to close friend members, such as a family relation or friend relation with the user of the electronic device 101. For example, if a group (e.g., a peer group) including persons is included in an image of the electronic device 101, the corresponding image can be automatically configured as a profile image with respect to the members of the corresponding group. For example, if the electronic device 101 has a history of sharing (e.g., transmission during communication) an image with an external device, an image transmitted to the corresponding external device can be automatically configured as a profile image.

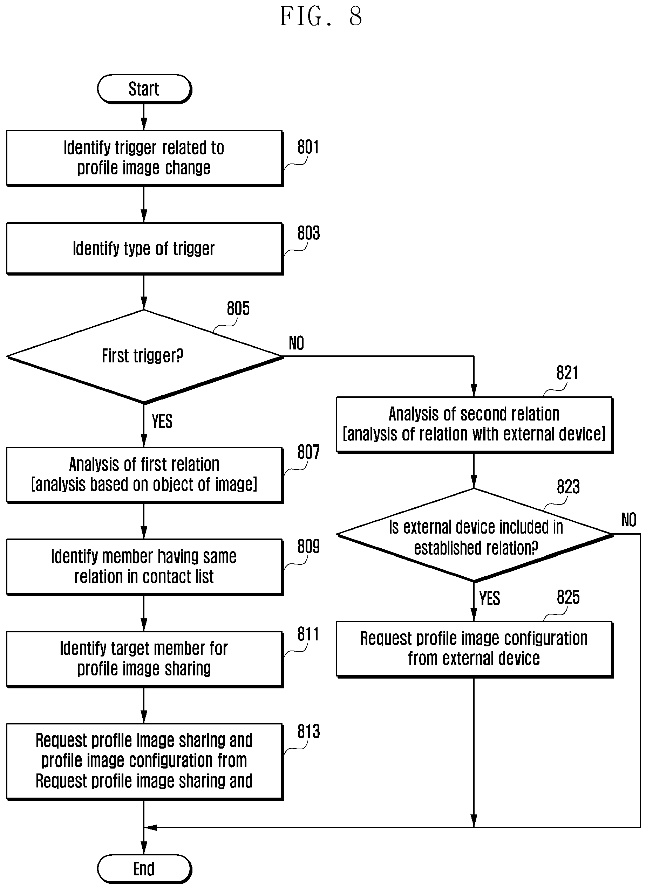

FIG. 8 is a flowchart illustrating an operation of sharing a profile image in the electronic device according to various embodiments.

Referring to FIG. 8, at operation 801, the processor 120 of the electronic device 101 may identify a trigger related to a profile image change. In an example embodiment, the processor 120 may identify a trigger for sharing a profile image in response to the detection of at least one of a change of a profile image of the user stored in the electronic device 101, the storage or modification of an image in the gallery of the electronic device 101, the execution of selfie (or photo) photographing, the transmission of an image through direct (or wired) communication or wireless communication, and a profile image sharing request from the user.

At operation 803, the processor 120 may identify the type of trigger in response to the identification of the trigger. In an example embodiment, the processor 120 may identify whether the trigger corresponds to a first trigger or a second trigger. In various embodiments, the first trigger may include a trigger for sharing a profile image by analyzing a relation with a user based on an object within an image, for example. In various embodiments, the second trigger may include a trigger for sharing a profile image by analyzing a relation with a user based on the sharing (or transmission) of an image with (or to) an external device by the electronic device 101, for example.

If the trigger is identified as a first trigger (Yes at operation 805), the processor 120 may perform the analysis of a first relation at operation 807. In accordance with an embodiment, the analysis of the first relation may include analyzing a relation with the user based on the object of the image. For example, the processor 120 may recognize an object in the image and analyze whether the object is a single object or a plurality of objects.

In an example embodiment, the processor 120 may identify whether a single object is the face of the user or the face of another user. For example, when a single object is an object corresponding to the face of the user, the processor 120 may identify relation information about a target member for profile image sharing (hereinafter referred to as a "target member") as first relation information (e.g., a family member). For example, when a single object is an object corresponding to the face of another user, the processor 120 may identify relation information about a target member as first relation information (e.g., a family member) or second relation information (e.g., a friend) or third relation information (e.g., a peer) based on a result of the recognition of the face of another user.

In an example embodiment, the processor 120 may identify relation information about a target member as first relation information (e.g., a family member), second relation information (e.g., a friend) or third relation information (e.g., a peer) based on a result of the recognition of at least one of a plurality of objects.

At operation 809, the processor 120 may identify a member (or group) having the same relation information as the identified relation information in the contact list. In accordance with an embodiment, the processor 120 may identify a member (or group) having the first relation information in the contact list in response to the identification of the first relation information.

At operation 811, the processor 120 may identify a target member for profile image sharing. For example, the processor 120 may identify at least one member (e.g., having the same relation information) identified in the contact list as a target member.

At operation 813, the processor 120 may share the profile image with the identified target member, and may request a profile image related to the user of the electronic device 101 to be configured based on the shared profile image. In accordance with an embodiment, the processor 120 may transmit the target image to at least one external device corresponding to the identified target member using the communication module 190, so a profile image related to the user of the electronic device 101 is configured and changed based on the target image.

If the trigger is identified to be a second trigger (No at operation 805), the processor 120 may perform the analysis of a second relation at operation 821. In accordance with an embodiment, the analysis of the second relation may include analyzing a relation with the user based on information of an external device with (or to) which an image has been shared (or transmitted) (e.g., a counterpart electronic device that is being communicated (or connected for communication)). For example, the processor 120 may recognize information (e.g., as different user information, for example, a telephone number) about the external device and analyze relation information with the user based on the information of the external device.

At operation 823, the processor 120 may identify whether the external device is included in an established relation based on the results of the analysis. In accordance with an embodiment, the processor 120 may identify whether information of the external device has been registered with the contact list or whether it has shared a profile image with the external device before based on a communication history.

If the external device is identified to be not included in the established relation (No at operation 823), the processor 120 may terminate the profile image sharing operation for the corresponding external device.

If the external device is identified to be included in the established relation (Yes at operation 823), the processor 120 may request a profile image configuration from the corresponding external device at operation 825. For example, the processor 120 may request the external device to configure a profile image related to the user of the electronic device 101 based on the image transmitted to the external device using the communication module 190.

In accordance with various embodiments, a profile image may be shared with other members having the same relation information as relation information of an external device in addition to an external device with which an image has been shared. For example, the processor 120 may identify a member (or group) having the same relation information in the contact list based on relation information of an external device, and may request the identified member, that is, a target member, to share and configure a profile image.

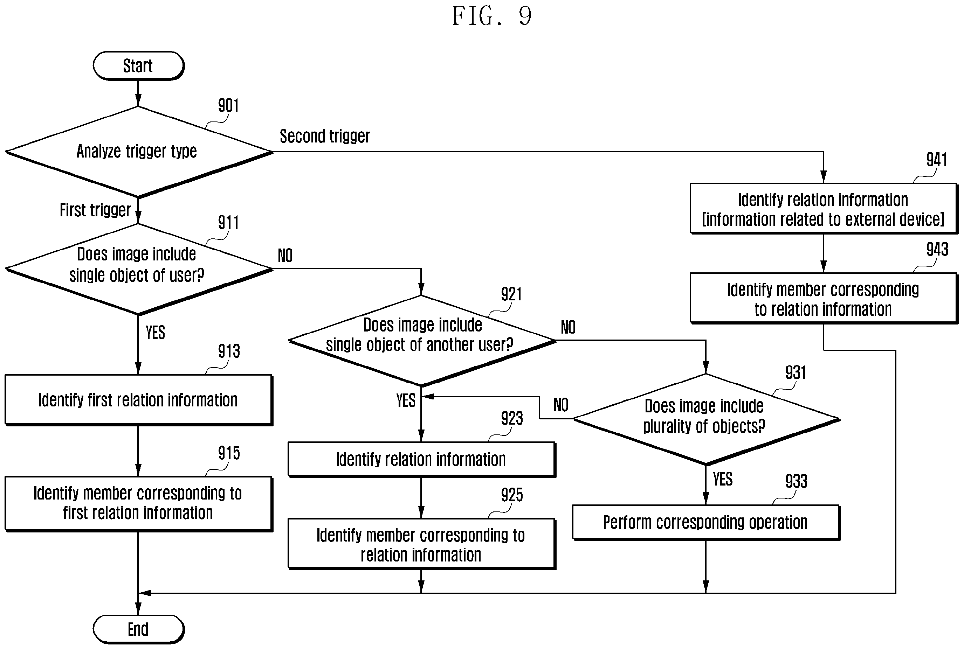

FIG. 9 is a flowchart illustrating an operation of sharing a profile image based on relation information in the electronic device according to various embodiments.

Referring to FIG. 9, at operation 901, the processor 120 of the electronic device 101 may analyze (or identify) a trigger type. For example, in response to the identification of a trigger, the processor 120 may identify whether the identified trigger corresponds to a first trigger for analyzing a relation with the user based on an object within an image or whether the identified trigger corresponds to a second trigger for analyzing a relation with the user based on a communication history (e.g., a history in which the electronic device 101 has shared (or transmitted) an image with (or to) an external device. In an example embodiment, the communication history may include information indicative of a relation in which the electronic device 101 and an external device have shared an image, for example.

If the trigger is identified to be the first trigger at operation 901, the processor 120 may identify whether an image includes a single object of the user at operation 911, whether the image includes a single object of another user at operation 921, or whether the image includes a plurality of objects at operation 931. In various embodiments, operation 911, operation 921 and operation 931 may be performed in parallel or sequentially. In accordance with an embodiment, the processor 120 may recognize an object (e.g., a face) in an image through image processing, and may identify whether the object is a single object or a plurality of objects. If the object is a single object, the processor 120 may identify whether the corresponding object is an object of the user or an object of another user.

When a single object of the user is recognized in the image (Yes at operation 911), the processor 120 may identify first relation information at operation 913. In an example embodiment, the processor 120 may identify that the image includes only a user face, such as a selfie image, and may identify a target member for profile image sharing as a member (or group) having a first relation (e.g., a family relation). In various embodiments, relation information based on the object of an image may be configured in various ways based on a user definition. For example, a first image type (e.g., a selfie image or the best photo) including only a user face may be shared with members familiar with the user. The user may implement the first image type in various ways based on a user configuration, such as that the first image type is configured (or mapped) in a first relation (e.g., a family relation), configured (or mapped) in a second relation (e.g., a friend relation) or configured (or mapped) in the first relation and the second relation as a target member for profile image sharing.

At operation 915, the processor 120 may identify a member (or group) corresponding to the identified first relation information as a target member for profile image sharing. In an example embodiment, the processor 120 may include an operation of enabling the identified target member to configure a profile image of the user of the electronic device 101 based on a corresponding image.

If a single object of another user is recognized in the image (Yes at operation 921), the processor 120 may identify relation information at operation 923. In an example embodiment, the processor 120 may identify another user corresponding to the object using a face recognition technology based on the object of an image. The processor 120 may identify the relation information in accordance with the relation between the determined another user and the user. In an example embodiment, if another user has been configured (or registered) as (or with) the contact list as a family member, the processor 120 may identify relation information for a target member as first relation information. In an example embodiment, if another user has been configured (or registered) as (or with) the contact list as a friend, the processor 120 may identify relation information for a target member as second relation information. In an example embodiment, if another user has been configured (or registered) as (or with) the contact list as a peer, the processor 120 may identify relation information for a target member as third relation information.

At operation 925, the processor 120 may identify a member (or group) corresponding to the identified relation information as a target member for profile image sharing. In accordance with various embodiments, another user corresponding to an object within an image may be configured as a target member, or the members of a group to which another user corresponding to an object within an image belongs (e.g., all of members having the same relation information) may be configured as a target member based on the definition of the user of the electronic device 101. In an example embodiment, the processor 120 may identify a target member on an object basis or based on a group to which an object belongs according to such user definition (e.g., according to an option configuration). In an example embodiment, the processor 120 may include an operation of enabling an identified target member to configure a profile image of the user of the electronic device 101 based on a corresponding image.

When a plurality of objects (e.g., the faces of other users) is recognized in the image (Yes at operation 931), the processor 120 may proceed to operation 933 and perform operations subsequent to operation 933. In accordance with various embodiments, when a plurality of objects is included in an image, the processor 120 may identify at least one group to which other users corresponding to respective objects in the contact list belongs. In accordance with an embodiment, other users corresponding to the plurality of objects may belong to the same group (e.g., a first group) in the contact list, may belong to different groups (e.g., a second group) in the contact list, or may include another user not belonging to a group. In such a case, the processor 120 may include all of the members of each group and another user not belonging to a group in a target member. In accordance with another embodiment, the processor 120 may identify only members, corresponding to objects included in an image, as a target member according to user definition.

If an object corresponding to a face is not identified in the image at operation 911, operation 921 and operation 931 (e.g., a scenery image or an animal image), the processor 120 may perform a corresponding operation at operation 933. In accordance with an embodiment, if an object is not included in the image, the processor 120 may identify a member having configured relation information as a target member or terminate an operation for sharing a profile image based on an option configuration according to the definition of the user of the electronic device 101. For example, assuming that the second relation information has been configured with respect to an image not including an object, the processor 120 may identify a member, having the second relation information as a target member, as a target member. For example, if an image not including an object has been configured to be not shared as a profile image, the processor 120 may terminate an operation of sharing a profile image.

If the trigger is identified as a second trigger at operation 901, the processor 120 may identify relation information based on information (e.g., user information or a telephone number) related to an external device at operation 941. In accordance with an embodiment, the processor 120 may identify information related to an external device in the contact list and identify a relation established with the user of the external device in the contact list. For example, if the user of an external device has been configured as a family member in the contact list, the processor 120 may identify the first relation information. If the user of an external device has been configured as a friend in the contact list, the processor 120 may identify the second relation information. In an example embodiment, the user of an external device may be a user not having a specific relation in the contact list or the user of an external device may be a user not registered with the contact list. In such a case, the processor 120 may identify relation information according to the definition of the user of the electronic device 101. In an example embodiment, if the processor 120 has a history in which it has shared an image with a corresponding external device based on a communication history, it may identify fourth relation information (e.g., other relations). In an example embodiment, if the processor 120 does not have a communication history with a corresponding external device, it may identify the user of the corresponding external device as a non-registration relation and terminate an operation of sharing a profile image or may identify only the user of the external device as a target member.

At operation 943, the processor 120 may identify a member (or group) corresponding to the identified relation information as a target member for profile image sharing. In accordance with various embodiments, the processor 120 may configure only the user of an external device as a target member or configure the members of a group to which the user of an external device belongs (e.g., all of members having the same relation information) as a target member according to the definition of the user of the electronic device 101. In an example embodiment, the processor 120 may include an operation of identifying a target member according to user definition, such as that described above (e.g., according to an option configuration), and enabling the identified target member to configure a profile image of the user of the electronic device 101 based on a corresponding image.

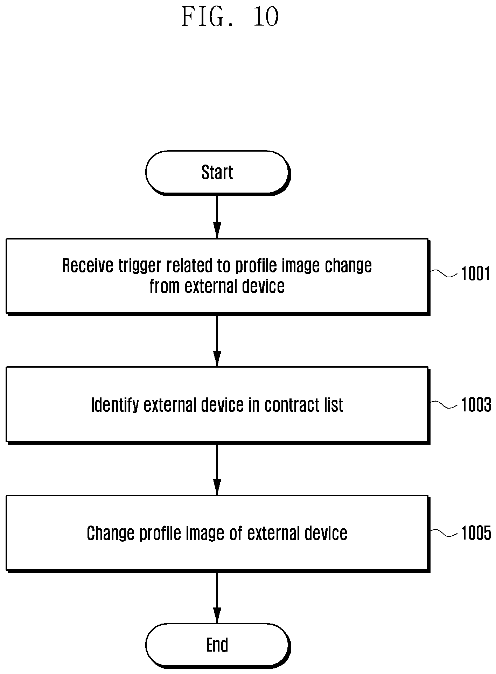

FIG. 10 is a flowchart illustrating an operation of configuring a profile image related to an external device in the electronic device according to various embodiments.

Referring to FIG. 10, at operation 1001, the processor 120 of the electronic device 101 may receive a trigger related to a profile image change from an external device. In an example embodiment, the processor 120 may receive an image and configuration request related to a change of a profile image related to the user of an external device from the external device. In an example embodiment, the processor 120 may include an operation of storing an image received from an external device.

At operation 1003, the processor 120 may identify the external device in the contract list of the electronic device 101 in response to the reception of the trigger. In accordance with an embodiment, the processor 120 may identify information (e.g., user information, device identity information or a telephone number) related to the external device that has generated the trigger related to the profile image change, and may identify a member corresponding to (or including) the information identified in the contact list.

At operation 1005, the processor 120 may change a profile image related to the user of the external device. In an example embodiment, the processor 120 may configure the profile image related to the user of the external device based on an image received from the external device.

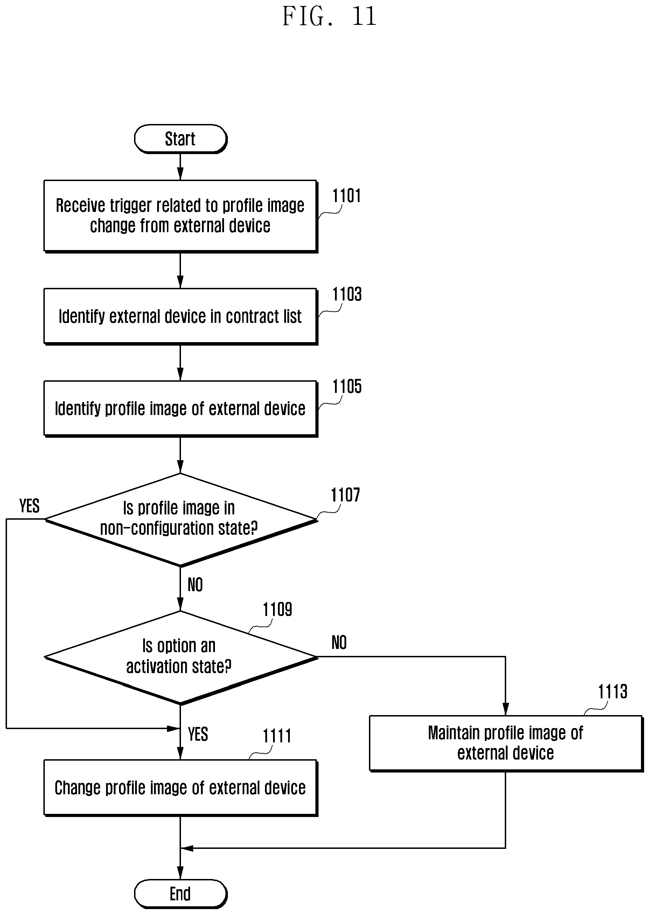

FIG. 11 is a flowchart illustrating an operation of configuring a profile image related to an external device in the electronic device according to various embodiments.

Referring to FIG. 11, at operation 1101, the processor 120 of the electronic device 101 may receive a trigger related to a profile image change from an external device. In an example embodiment, the processor 120 may receive an image and configuration request related to a change of a profile image related to the user of an external device from the external device. In an example embodiment, the processor 120 may include an operation of storing an image received from an external device.

At operation 1103, the processor 120 may identify the external device in the contract list of the electronic device 101 in response to the reception of the trigger. In accordance with an embodiment, the processor 120 may identify information (e.g., user information, device identity information or a telephone number) related to the external device that has generated the trigger related to the profile image change, and may identify a member corresponding to (or including) the information identified in the contact list.

At operation 1105, the processor 120 may identify a profile image related to the user of the identified external device in response to the identification of the external device. In an example embodiment, the processor 120 may check the configuration state of the profile image in user information related to the user of the external device in the contact list. In an example embodiment, the configuration state of a profile image may indicate a first state (e.g., configuration state) if the profile image has been registered with (or configured) in the profile image region of user information (or profile information) related to the user or may indicate a second state (e.g., non-configuration state) if the profile image region is a blank state (or empty), for example.

At operation 1107, the processor 120 may check whether the profile image related to the user of the external device is in the non-configuration state or the configuration state based on a result of the identification at operation 1105.

At operation 1107, when the profile image is checked to be the non-configuration state (Yes at operation 1107), the processor 120 may change the profile image related to the user of the external device at operation 1111. In an example embodiment, the processor 120 may change and configure the profile image related to the user of the external device based on an image received from the external device.

When the profile image is checked to be the configuration state (No at operation 1107), the processor 120 may check whether an option is an activation state at operation 1109. For example, the electronic device 101 may include a first option (e.g., automatic change activation (or function on)) for automatically changing and configuring a profile image in response to a request from an external device and a second option (e.g., automatic change deactivation (or function off)) for requesting a user to identify a profile image when a request is made by an external device or not automatically changing a profile image in relation to the automatic change of the profile image related to the user of the external device. The first option and the second option may be set by a user.

When the option is the activation state (e.g., first operation state) (Yes at operation 1109), the processor 120 may change the profile image related to the user of the external device at operation 1111.

When the option is the deactivation state (e.g., second option state) (No at operation 1109), the processor 120 may maintain the profile image related to the user of the external device at operation 1113. For example, the processor 120 may stop (or skip) an operation of changing a profile image related to the user of an external device, and may maintain an already registered profile image.

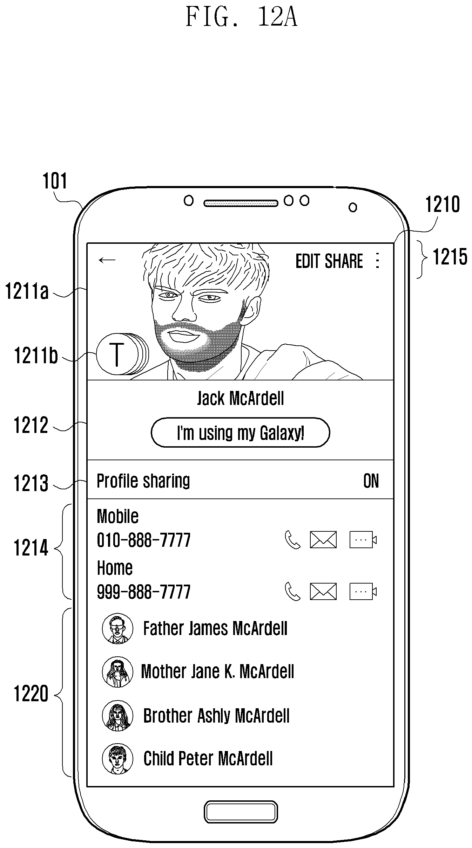

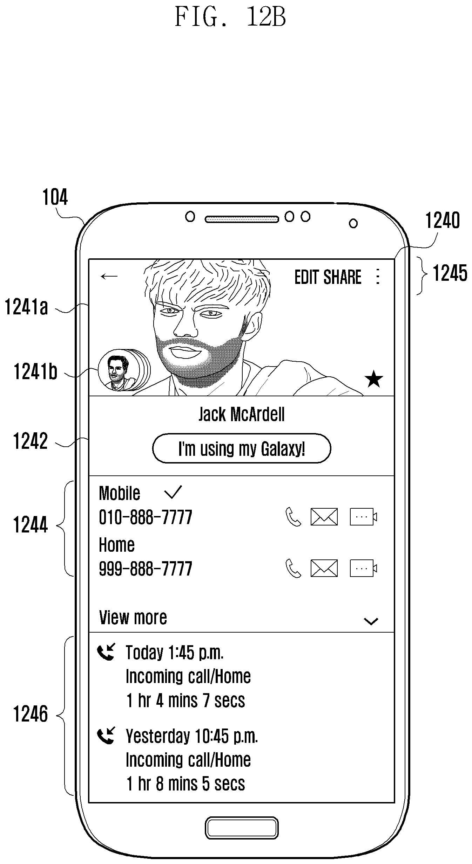

FIGS. 12A and 12B are diagrams illustrating examples of an operation of sharing a profile image in the electronic device according to various embodiments.

FIGS. 12A and 12B illustrate an example of various embodiments in which a user performs selfie photographing using the electronic device 101 and a selfie-photographed selfie image has been selected as a target image for profile image sharing. FIGS. 12A and 12B illustrate an example in which a selfie image including only a user face is shared with members having a first relation (e.g., family relation) with the user of the electronic device 101 as a profile image of the electronic device 101. In accordance with various embodiments, when selfie images are generated by the user through selfie photographing, the first electronic device 101 may automatically configure the best photo of the selfie images as a profile image of the user of the first electronic device 101.

FIG. 12A illustrates an example of a screen of the electronic device 101 (hereinafter referred to as a "first electronic device 101") that shares a profile image. FIG. 12B illustrates an example of a screen of any one (hereinafter referred to as a "second electronic device 104") of the electronic devices (e.g., electronic devices that will receive a shared profile image) of members having corresponding relations with the user of the first electronic device 101.

FIGS. 12A and 12B are described with reference to the first electronic device 101 and the second electronic device 104, respectively. FIG. 12A illustrates an example of a screen on which the first electronic device 101 displays profile information 1210 (e.g., Jack McArdell) of the user of the first electronic device 101.

In various embodiments, a user interface in which the profile information 1210 is displayed may include a region 1211 a in which a representative profile image of the user is displayed and a region 1211 b in which a plurality of sub-profile images is displayed. In an example embodiment, the profile information 1210 of FIG. 12A may illustrate the state in which a sub-profile image has not been configured in the region 1211 b in which a sub-profile image is displayed.

In accordance with various embodiments, the user interface may include an icon 1215 for manually changing or sharing a profile image of the user. In an example embodiment, the first electronic device 101 may change or share a profile image of the user when the icon 1215 for changing or sharing the profile image of the user is selected by the user.

In accordance with various embodiments, the user interface may include a region 1212 in which user information including the name and job of the user and the type (or name) of the electronic device are displayed, a region 1213 in which the profile sharing function of the first electronic device 101 has been activated or deactivated in response to a user input, and a contact information region 1214 in which contact information related to the user is displayed. In an example embodiment, the contact information may include a wireless telephone number, a wired telephone number or an account (or e-mail).

In accordance with various embodiments, the user interface may include a member region 1220 in which members grouped based on relations with the user or an individual member is displayed. In an example embodiment, members according to a user configuration may be displayed in the member region 1220. For example, a member having relation information according to a user configuration may be displayed in the member region 1220. FIG. 12A illustrates an example in which members having first relation information (e.g., family) with the user are displayed. For example, the members of the member region 1220 may include a family member of "Jack McArdell" (hereinafter referred to as "Jack"), that is, the user of the first electronic device. The members may include "James McArdell" (hereinafter referred to as "James") that is a father, "Jane K. McArdell" that is a mother, "Ashly McArdell" that is a brother, and "Peter K. McArdell" that is a child. The members may be displayed based on user information (e.g., a nickname, a name or a telephone number) related to the members and profile images.

In accordance with various embodiments, when the selfie image 1211 a of the user is selected by the first electronic device 101, the first electronic device 101 may share the selfie image with the members having the first relation information in the contact list as a profile image. In various embodiments, an example in which the selfie image 1211 a of the first electronic device 101 has been shared with the second electronic device 104 having the first relation information is illustrated in FIG. 12B.

Referring to FIG. 12B, the second electronic device 104 may be the electronic device of one of the members having the first relation information with the user of the first electronic device 101, for example, "James" that is the father of the user of the first electronic device 101. FIG. 12B illustrates an example of a screen on which the second electronic device 104 displays profile information 1240 of "Jack", that is, the user of the first electronic device 101, that is, one member of a contact list stored in the second electronic device 104.

In various embodiments, the user interface in which the profile information 1240 of another user (e.g., "Jack") is displayed (e.g., a user interface provided in response to a display request for the profile information of "Jack" in the contact list) may include a region 1241 a in which a representative profile image is displayed and a region 1241 b in which a plurality of sub-profile images is displayed. A profile image of "Jack" (e.g., the profile image of "Jack") shared by the first electronic device 101 may have been automatically configured (or changed) in the region 1241 a in which a representative profile image is displayed. The plurality of sub-profile image regions 1241 b may include profile images related to "Jack" and previously shared by the first electronic device 101.

In accordance with various embodiments, the user interface may include an icon 1245 for manually changing a profile image related to the user of another electronic device (e.g., the first electronic device 101). In an example embodiment, the second electronic device 104 may change a profile image of "Jack" by detecting that the icon 1245 capable of changing a profile image of the user (e.g., "Jack") of the first electronic device 101 is selected by a user.

In accordance with various embodiments, the user interface may include user information 1242 including the name and job of another user (e.g., "Jack") or the type (or name) of the electronic device and a contact information region 1244 in which contact information related to "Jack" is displayed. In an example embodiment, the contact information may include the wireless telephone number, wired telephone number or account (or e-mail) of "Jack."

In accordance with various embodiments, the user interface may include a communication log region 1246 indicative of a communication log (e.g., a recent call list) between "James", that is, the user of the second electronic device 104, and "Jack", that is, the user of the first electronic device 101.

As described above, in accordance with various embodiments, when a trigger related to a change of a profile image related to a first user is generated in the first electronic device 101, the profile image of the user of the first electronic device 101 can also be automatically changed in at least one different electronic device (e.g., the second electronic device 104) that has relation information obtained based on an image according to the trigger.

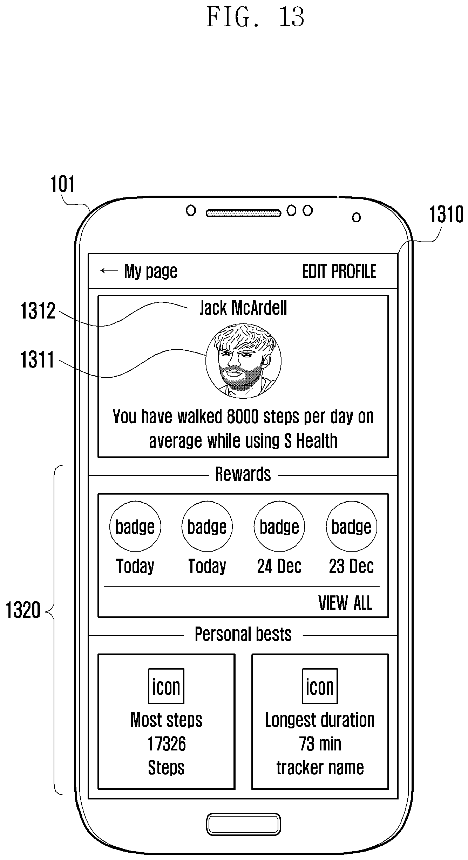

FIG. 13 is a diagram illustrating an example of an operation of sharing a profile image in the electronic device according to various embodiments.

FIG. 13 illustrates an example of a screen in which the user of the electronic device 101 is "Jack." In an example embodiment, various applications capable of configuring (or registering) a profile image, such as a contact information application for a contact list, may have been installed in the electronic device 101. The electronic device 101 may configure a shared profile image of "Jack" (or a profile image configured in the electronic device 101 as user profile information) as a profile image of the application within the electronic device 101. For example, when a profile image related to the user is changed in the contact information application, the corresponding profile image may be shared with various other applications in which the profile image is displayed, so the profile image can be used as profile images of various other applications.

In an example embodiment, a health-related application may have been installed in the electronic device 101. In an example embodiment, the health-related application may be an application capable of configuring an image (e.g., a profile image) as information related to the user. Accordingly, in various embodiments, when a representative profile image is configured in the electronic device 101 or a profile image is shared with an external device, the electronic device 101 may share the corresponding profile image with applications within the electronic device 101.

In accordance with an embodiment, as illustrated in FIG. 13, as in an example of a screen 1310 in which the health-related application has been executed in the electronic device 101, a shared profile image may be automatically shared as a profile image of the health-related application and displayed. In an example embodiment, the executed screen 1310 may include a region 1311 in which a profile image of the health-related application is displayed, a region 1312 in which user information is displayed, and a region 1320 in which health-related information is displayed. In an example embodiment, a shared image may be displayed in the profile image region 1311 of the health-related application as a profile image of the electronic device 101.

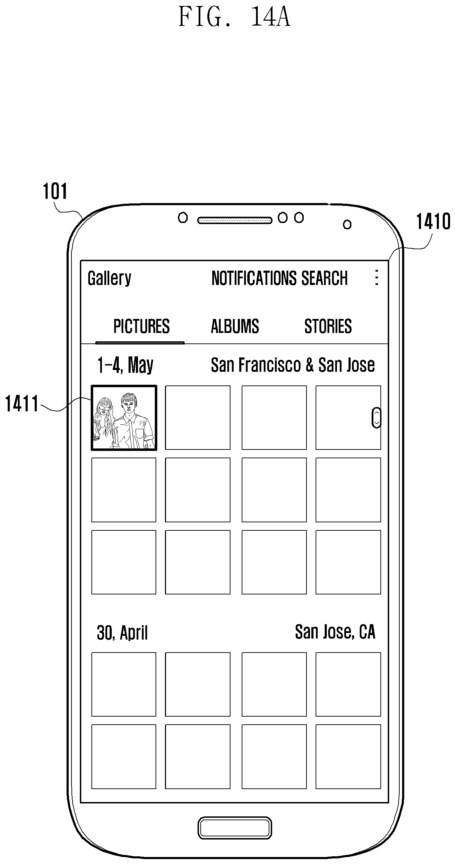

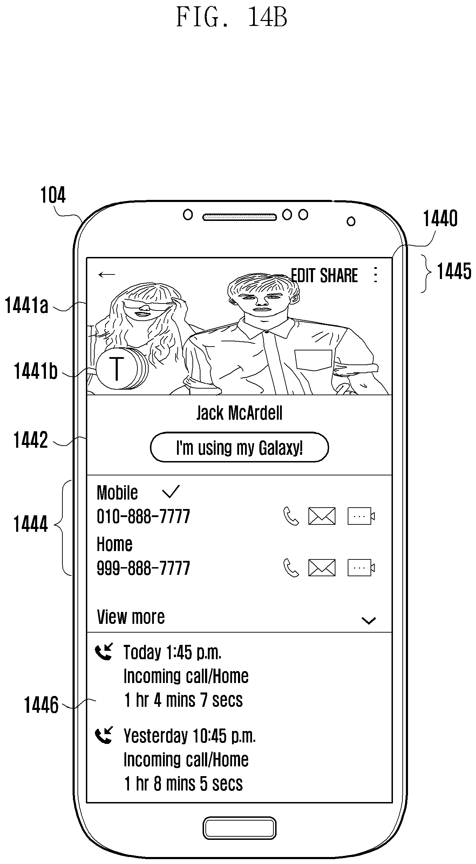

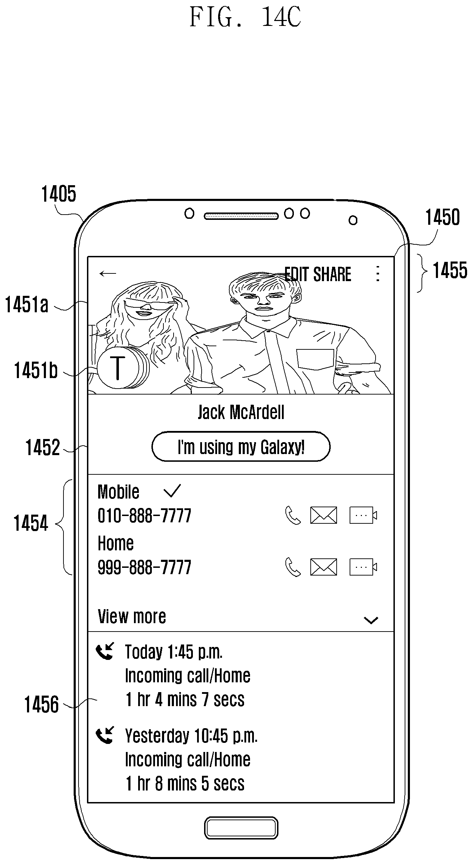

FIGS. 14A, 14B and 14C are diagrams illustrating examples of an operation of sharing a profile image in the electronic device according to various embodiments.

FIGS. 14A, 14B and 14C may illustrate one of various embodiments in which the electronic device 101 has selected one image from the gallery and the selected image has been configured as a target image for profile image sharing. For example, FIGS. 14A, 14B and 14C illustrate a case where a selected image includes the faces of a plurality of users, and may show an example in which the selected image is shared with members having relation information (e.g., a family relation) according to the faces of users as a profile image of the electronic device 101.

FIG. 14A illustrates an example of a screen of the electronic device 101 that shares a profile image (hereinafter referred to as a "first electronic device 101). FIGS. 14B and 14C illustrate examples of screens of the electronic devices (e.g., electronic devices that receive a shared profile image) (e.g., the second electronic device 104 and a third electronic device 1405) of members having corresponding relations with the user of the first electronic device 101.

In an example embodiment, the user of the first electronic device 101 may be "Jack McArdell" (hereinafter referred to as "Jack"), the user of the second electronic device 104 may be "James McArdell" (hereinafter referred to as "James"), and the user of the third electronic device 1405 may be "Peter McArdell" (hereinafter referred to as "Peter"). In an example embodiment, the user "James" of the second electronic device 104 and the user "Peter" of the third electronic device 1405 may have been configured as the members of one group (e.g., a family group) in the contact list of the first electronic device 101.

Referring to FIG. 14A, a plurality of images may have been stored in the gallery of the first electronic device 101. The plurality of images may include an image 1411 including the faces of a plurality of users. In an example embodiment, in FIG. 14A, the first electronic device 101 may receive the image 1411, belonging to the stored images and including the faces of a plurality of users, as a target image for profile image sharing. The first electronic device 101 may identify that the selected image 1411 includes the face of the user (e.g., "Jack") of the electronic device 101 and the face of "Peter" through the image analysis (e.g., object recognition based on image processing) of the image 1411. In an example embodiment, an operation of identifying a user related to an object (e.g., face) in the image 1411 may include, for example, identifying a face in the selected image 1411 and identifying that the face identified in the selected image 1411 corresponds to one of members stored in the contact list by comparing the identified face with profile images of the members of the contact list.

The first electronic device 101 may identify relation information about "Peter" recognized in the image 1411. In an example embodiment, the first electronic device 101 may identify a group to which "Peter" belongs and identify relation information regarding the corresponding group. In accordance with an embodiment, the first electronic device 101 may share the selected image 1411 with all of members within the group indicated by the identified relation information as a profile image of the user of the first electronic device 101. In accordance with an embodiment, the first electronic device 101 may share the selected image 1411 with only "Peter" included in the selected image 1411 as a profile image of the user of the first electronic device 101.

Referring to FIG. 14B, the second electronic device 104 may be the electronic device of "James", that is, one of the members of a group (e.g., a group to which "Peter" included in the selected image 1411 belongs) indicated by relation information identified based on the image 1411 selected by the first electronic device 101 in FIG. 14A.

FIG. 14B illustrates an example of a screen of a user interface in which profile information 1440 of "Jack", that is, the user of the first electronic device 101, is displayed in the second electronic device 104.

In various embodiments, the user interface may include a region 1441 a in which a representative profile image of "Jack", that is, the user of the first electronic device 101, is displayed and a region 1441b in which a plurality of sub-profile images is displayed. The representative profile image may include an image (e.g., the image 1411 of FIG. 14A) automatically shared by the first electronic device 101 as a profile image of "Jack." For example, the second electronic device 104 may have automatically configured (or changed) the image 1411 shared by the first electronic device 101 as a profile image of the user "Jack" of the first electronic device 101. The region 1441 b in which a plurality of sub-profile images is displayed may include profile images related to "Jack" and previously shared by the first electronic device 101.

In accordance with various embodiments, the user interface may include an icon 1445 for manually changing a profile image related to the user of the first electronic device 101. In an example embodiment, the second electronic device 104 may include the icon 1445 capable of changing a profile image of "Jack", that is, the user of the first electronic device 101. When the icon 1445 is selected by a user, the second electronic device 104 may change a profile image of "Jack."

In accordance with various embodiments, the user interface may include user information 1442 including the name and job of "Jack" or the type (or name) of the electronic device and a contact information region 1444 in which contact information related to "Jack" is displayed. In an example embodiment, the contact information may include the wireless telephone number, wired telephone number or account (or e-mail) of "Jack."

In accordance with various embodiments, the user interface may include a communication log region 1446 indicative of a communication log (e.g., a recent call list) between "James", that is, the user of the second electronic device 104, and "Jack", that is, the user of the first electronic device 101.

Referring to FIG. 14C, the third electronic device 1405 may be the electronic device of "Peter" that belongs to the faces identified in the image 1411 selected by the first electronic device 101 in FIG. 14A and that corresponds to the face of a profile image of the members of the contact list of the first electronic device 101.

FIG. 14C illustrates an example of a screen of a user interface in which profile information 1450 of "Jack", that is, the user of the first electronic device 101, is displayed in the third electronic device 1405.

In various embodiments, the user interface may include elements corresponding to those described with reference to FIG. 14B. For example, the third electronic device 1405 may also provide a user interface in which a profile image related to the user "Jack" of the first electronic device 101 is changed in the contact list of the third electronic device 1405 based on the image 1411 shared by the first electronic device 101 and the changed profile image is included.

In FIG. 14C, elements (e.g., 1450, 1451a, 1451b, 1452, 1454, 1455 and 1456) related to the user interface of the third electronic device 1405 may correspond to the elements (e.g., 1440, 1441a, 1441b, 1442, 1444, 1445 and 1446) described with reference to FIG. 14B, and a detailed description thereof is not repeated.

As described above, in accordance with various embodiments, when a trigger related to a change of a profile image related to a user is generated in the first electronic device 101, a profile image of the user of the first electronic device 101 may be automatically changed in at least one different electronic device (e.g., the second electronic device 104 and the third electronic device 1405) having relation information obtained based on an image according to the trigger.

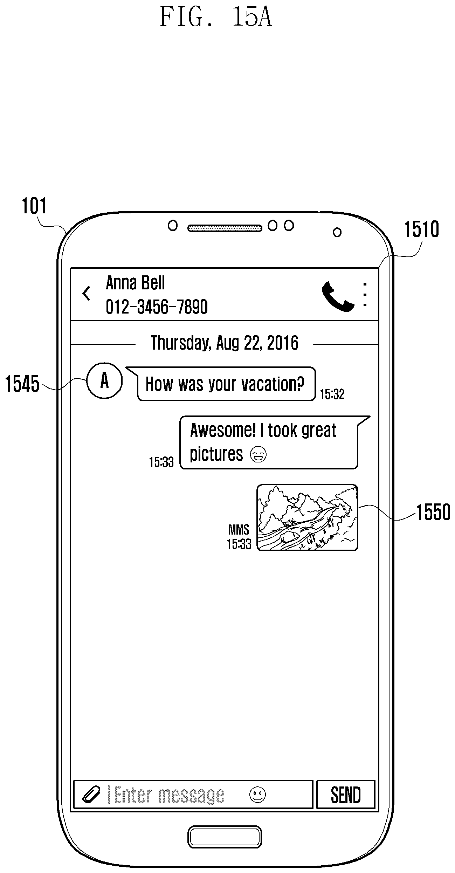

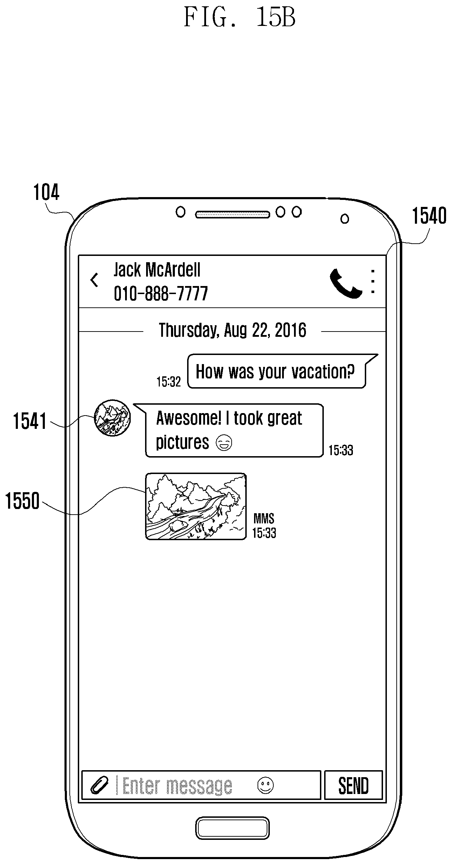

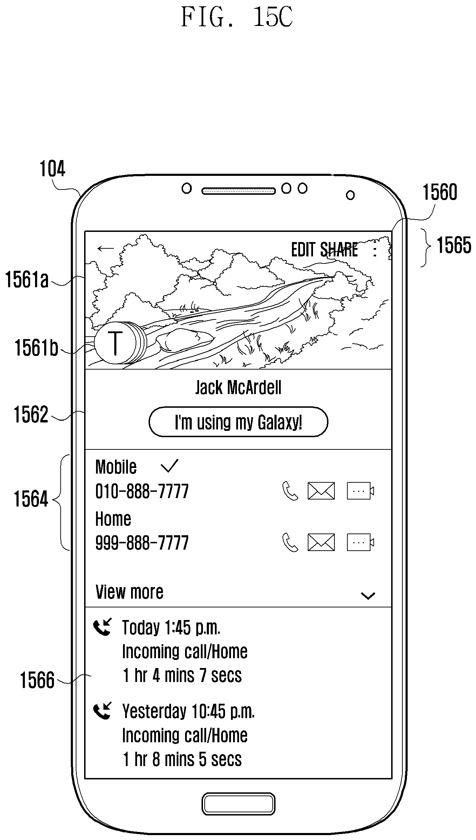

FIGS. 15A, 15B and 15C are diagrams illustrating examples of an operation of sharing a profile image in the electronic device according to various embodiments.

FIGS. 15A, 15B and 15C illustrate various embodiments in which while the first electronic device 101 and the second electronic device 104 communicate with each other, an image transmitted from the first electronic device 101 to the second electronic device 104 is shared with the second electronic device 104 as a profile image related to the user of the first electronic device 101. For example, if the first electronic device 101 transmits a selected image 1550 to a counterpart electronic device (e.g., the second electronic device 104) communicating with the first electronic device 101 and the user of the second electronic device 104 has specific relation information with the first electronic device 101, the first electronic device 101 may enable the image 1550 transmitted to the second electronic device 104 to be configured as a profile image related to the user of the first electronic device 101. In accordance with an embodiment, if the transmitted image 1550 is an image shared with other electronic devices as a profile image of the user of the first electronic device 101, the first electronic device 101 may share the corresponding image 1550 as a profile image. In accordance with an embodiment, the first electronic device 101 may share the image 1550 with other members included in a contact list and having corresponding relation information as a profile image of the first electronic device 101 based on specific relation information with the second electronic device 104.

As illustrated in FIG. 15A, the first electronic device 101 may display a dialogue box 1510 for exchanging messages (or for chatting) with the user of the second electronic device 104. In an example embodiment, it may be assumed that the user of the first electronic device 101 is "Jack McArdell" (hereinafter referred to as "Jack") and the user of the second electronic device 104 who exchanges messages with the first electronic device 101 is "Anna Bell" (hereinafter referred to as "Anna").

In an example embodiment, the dialogue box 1510 displayed in the first electronic device 101 may be a box that has been activated for "Jack", that is, the user of the first electronic device 101, to exchange messages with "Anna", that is, the user of the second electronic device 104. In an example embodiment, the dialogue box 1510 may include a profile image region in which an image object (e.g., an image icon) 1545 corresponding to a profile image of the user (e.g., "Anna") of the second electronic device 104 is displayed. Messages received from the second electronic device 104 in proximity to (or association with) the image object 1545 may be arranged on the left and displayed. In an example embodiment, when "Jack", that is, the user of the first electronic device 101 in which the dialogue box 1510 is displayed, inputs a message to the dialogue box 1510, the input message may be arranged on the right of the dialogue box 1510 and displayed. In an example embodiment, the display of an image object corresponding to a profile image of "Jack", that is, the user of the first electronic device 101 in which the dialogue box 1510 is displayed, may be omitted (or the image object may not be displayed).

Referring to FIG. 15A, "Jack", that is, the user of the electronic device 101, may upload the image 1550 into the dialogue box 1510 in order to transmit the image to "Anna." The first electronic device 101 may transmit the image 1550 to the second electronic device 104 using configured wireless communication in response to the uploading of the image 1550 by "Jack." In an example embodiment, the image 1550 transmitted by the first electronic device 101 may be displayed in the dialogue box 1510. The first electronic device 101 may select the transmitted image 1550 as a profile image of the user "Jack" of the first electronic device 101. The first electronic device 101 may share the selected image 1550 with another member who belongs to the members of the contact list and who has corresponding relation information as a profile image of the first electronic device 101 based on relation information with the user "Anna" of the second electronic device 104.

The second electronic device 104 illustrated in FIG. 15B may be the electronic device of "Anna" that receives the image 1550 transmitted by the first electronic device 101 through communication with the first electronic device 101 of FIG. 15A. The second electronic device 104 may display a dialogue box 1540 that has been activated to exchange messages with the first electronic device 101.

In an example embodiment, the dialogue box 1540 displayed by the second electronic device 104 may include a profile image region in which an image object (e.g., an image icon) 1541 corresponding to a profile image of "Jack", that is, the user of the first electronic device 101, is displayed. Messages received from the first electronic device 101 in proximity to (or association with) the image object 1541 may be arranged on the left and displayed. In an example embodiment, when "Anna", that is, the user of the second electronic device 104 in which the dialogue box 1540 is displayed inputs a message to the dialogue box 1540, the input message may be arranged on the right of the dialogue box 1540 and displayed. In an example embodiment, the display of an image object corresponding to a profile image of "Anna", that is, the user of the second electronic device 104 in which the dialogue box 1540 is displayed, may be omitted (or the image object may not be displayed).

Referring to FIG. 15B, the second electronic device 104 may have automatically configured (or changed) the image 1550 shared by the first electronic device 101 as a profile image of "Jack", that is, the user of the first electronic device 101. Accordingly, the second electronic device 104 may display the image object 1541, corresponding to the profile image of "Jack" of the first electronic device 101, in the dialogue box 1540 as a profile image related to the image 1550 shared by "Jack" through the dialogue box 1540.

FIG. 15C illustrates an example of a screen of a user interface in which profile information 1560 of "Jack", that is, the user of the first electronic device 101, is displayed in the second electronic device 104.

In various embodiments, the user interface may include elements corresponding to the elements described with reference to FIG. 14B. For example, the second electronic device 104 may also provide a user interface in which a profile image related to the user "Jack" of the first electronic device 101 is changed in the contact list of the second electronic device 104 based on the image 1550 shared by the first electronic device 101 and the changed profile image is included. For example, in the user interface, a profile image of "Jack" may be configured based on the image 1550 shared by the first electronic device 101 and displayed in a region 1561 a in which a representative profile image of "Jack" is displayed.

In FIG. 15C, elements (e.g., 1561 a, 1561b, 1562, 1564, 1565 and 1566) of the second electronic device 104 related to the user interface may correspond to the elements (e.g., 1440, 1441 a, 1441b, 1442, 1444, 1445 and 1446) described with reference to FIG. 14B, and a detailed description thereof is not repeated.

In accordance with various embodiments, the first electronic device 101 may identify relation information by analyzing the contents of messages exchanged with the second electronic device 104. For example, the first electronic device 101 may identify that the user "Anna" of the second electronic device 104 has specific relation information based on the contents of messages exchanged with the second electronic device 104. In an example embodiment, if the contents of messages exchanged with the first electronic device 101 include a phrase or word meaning a family, such as "Mother", "Father", "Older brother", "Older sister" or "Home", the first electronic device 101 may identify that the user "Anna" of the second electronic device 104 is included in relation information (e.g., first relation information) configured as a family relation. In an example embodiment, if the contents of messages exchanged with the first electronic device 101 include a phrase or word meaning close relations (e.g., friend), such as "Friend" or "School", the first electronic device 101 may identify that the user "Anna" of the second electronic device 104 is included in relation information (e.g., second relation information) configured as close relations (or a friend relation).

In an example embodiment, if there is no image shared with the second electronic device 104, the first electronic device 101 may share the best photo (e.g., a selfie image) stored in the first electronic device 101 as a profile image related to the user of the first electronic device 101.

As described above, in accordance with various embodiments, when the first electronic device 101 transmits an image to the second electronic device 104 that communicates with the first electronic device 101, it may enable a profile image related to the user of the first electronic device 101 to be changed into the transmitted image in the contact list of the second electronic device 104 based on relation information with the second electronic device 104. In accordance with an embodiment, the first electronic device 101 may enable an image transmitted to the second electronic device 104 to be shared with another member having the same relation information as relation information of the second electronic device 104 in the contact list of the first electronic device 101, so the transmitted image is configured as a profile image of the user of the first electronic device 101.

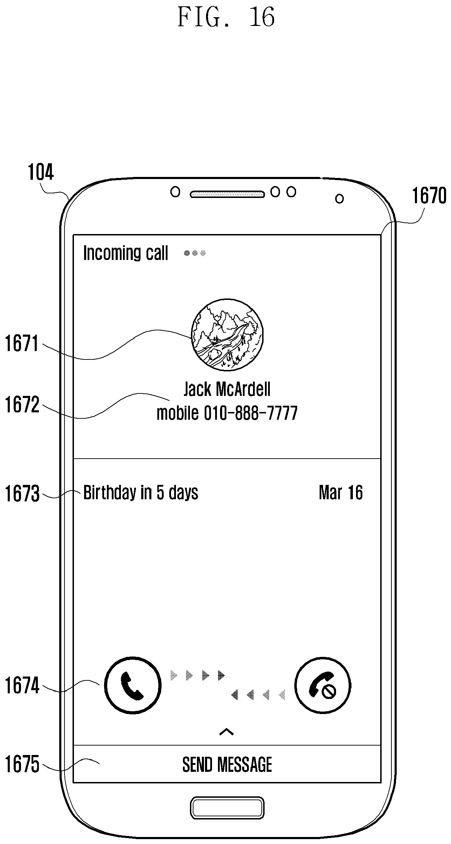

FIG. 16 is a diagram illustrating an example of an operation of sharing a profile image in the electronic device according to various embodiments.

FIG. 16 illustrates an example of a screen of a user interface displayed when a call is performed in the second electronic device 104. For example, in FIG. 16, it may be assumed that the second electronic device 104 has configured an image, shared by the first electronic device 101, as a profile image related to the user of the first electronic device 101 in the contact list based on the image shared by the first electronic device 101.

In accordance with an embodiment, the second electronic device 104 may display a screen 1670 of a user interface related to call reception (hereinafter referred to as a "call screen 1670") in response to the reception of a call signal from the first electronic device 101. In an example embodiment, the call screen 1670 may include a region in which an image object (e.g., image icon) 1671 corresponding to a profile image of the user "Jack" of the first electronic device 101 is displayed based on an image shared by the first electronic device 101 and a region in which contact information 1672 related to the user "Jack" of the first electronic device 101 is displayed. In an example embodiment, the contact information may include a telephone number related to the user "Jack" of the first electronic device 101 (e.g., the telephone number of the first electronic device 101) and the name or account (or e-mail) of the user "Jack."

In an example embodiment, the call screen 1670 may include a region in which information 1673 regarding the user of the first electronic device 101 input to (or registered with) the contact list of the second electronic device 104 is displayed. In an example embodiment, the information regarding the user may include information regarding the birthday of the user or a schedule with the user.

In an example embodiment, the call screen 1670 may include a region in which at least one object 1674 (e.g., a permission icon and/or a rejection icon) capable of receiving an input related to the permission or rejection of call reception by a user is displayed. For example, when the icon for selecting (e.g., touch or swipe) a call is selected by a user, the second electronic device 104 may connect the call with a counterpart electronic device. When the icon for rejecting (e.g., touch or swipe) a call is selected by a user, the second electronic device 104 may reject a call request from a counterpart electronic device.

In an example embodiment, the call screen 1670 may include a region in which a message object 1675 (e.g., icon) for transmitting a message to a counterpart electronic device is displayed while a call is received from the counterpart electronic device. In an example embodiment, when the message object 1675 is selected (e.g., a touch or swipe) by a user while a call is received, the second electronic device 104 may display a screen in which a specific message can be selected (or input) in a pop-up form.

The examples in which the electronic device 101 according to various embodiments shares a profile image selected by the electronic device 101 based on relation information of a contact list with at least one different electronic device as a profile image related to the user of the electronic device 101 have been described above. An example in which the electronic device 101 according to various embodiments shares an image selected by the electronic device 101 based on a user account related to the user of the electronic device 101 with an application (e.g., a plurality of applications installed in the electronic device 101) and another electronic device (e.g., a plurality of electronic devices (or multiple devices) grouped based on a user account) is described below.

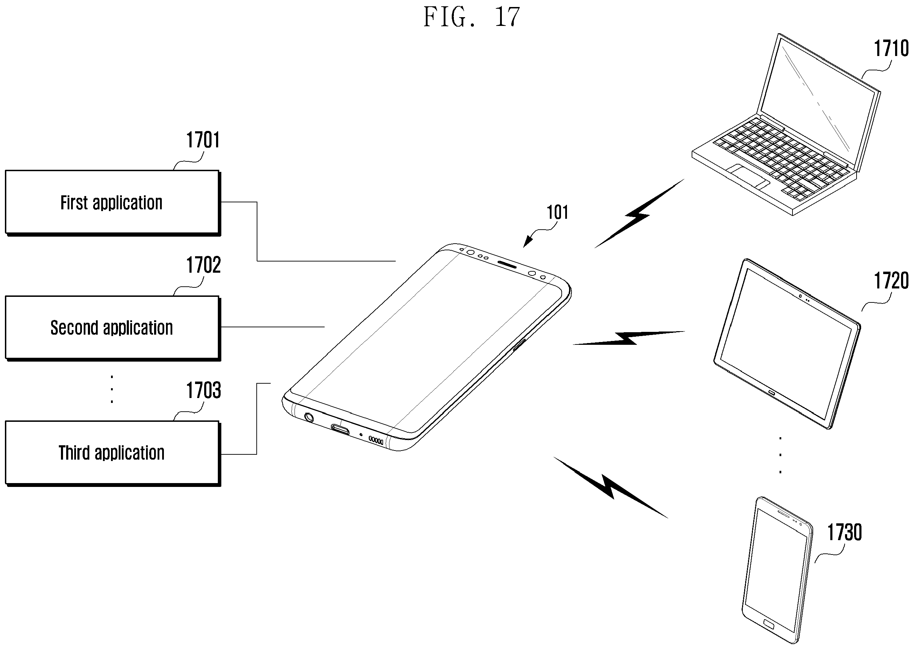

FIG. 17 is a diagram illustrating an example of an operation of sharing a profile image based on an account in the electronic device according to various embodiments.

As illustrated in FIG. 17, at least one application, such as a first application 1701, a second application 1702 and a third application 1703, may be installed in the electronic device 101. In accordance with various embodiments, the user of the electronic device 101 may use at least one different electronic device, such as a first device 1710, a second device 1720 or a third device 1730, including the electronic device 101. In accordance with various embodiments, at least one of the applications (e.g., the first application 1701, the second application 1702 and the third application 1703) installed in the electronic device 101 may be installed in other electronic devices (e.g., the first device 1710, the second device 1720 and the third device 1730) in common.

In accordance with various embodiments, the first application 1701, the second application 1702 and the third application 1730 may be applications with which a user account (e.g., samsung@samsung.com) can be registered.

In accordance with various embodiments, a user may open the same user account as a user account (e.g., samsung@samsung.com) open through the electronic device 101 in the first device 1710, the second device 1720 and the third device 1730. When the user account is open in the first device 1710, the second device 1720 and the third device 1730, they may be operatively connected to other devices belonging to the same user account in addition to the electronic device 101. In accordance with an embodiment, the first device 1710, the second device 1720 and the third device 1730 may have a common environment (e.g., an application) with the electronic device 101 based on the user account.

In accordance with various embodiments, the user account is information about a user (e.g., account information), and may include profile information, for example. In an example embodiment, the profile information may include a variety of types of information, such as information necessary for a user to log on to a system, for example, the identity number (e.g., an e-mail address and/or a telephone number), name, password, location information (e.g., a country or area), use language information, profile image and address of the user, and the access permissions and access restrictions of the user. In accordance with various embodiments, the account information may include application information connected based on a user account and device information based on a user account.

In various embodiments, the user account may include, for example, a user ID (e.g., an e-mail address and/or a telephone number) and a password and may be generated by a user for the purpose of a person's identification and security. In various embodiments, the user account may be assigned rights to use the system (e.g., the electronic device 101, the devices 1710, 1720 and 1730, and the applications 1701, 1702 and 1703) of a user, for example. For example, the user ID may include information capable of uniquely identifying a user in the electronic device 101, an application installed in the electronic device 101 or another device.

In various embodiments, when a user account is open (or input) by the electronic device 101, account information related to the user account may be registered with a server (e.g., the server 406 of FIG. 4). In an example embodiment, a user may open a user account using the electronic device 101 and register the user account with the server 406. In an example embodiment, when the user account open by the user through the electronic device 101 is configured (or input) in (or to) the first device 1710, the first device 1710 may be synchronized with the electronic device 101 through the server 406 to share application information or shared content (e.g., an image) stored in the electronic device 101.

Referring to FIG. 17, in accordance with various embodiments, when a trigger for sharing a profile image of a user is identified, the electronic device 101 may identify the sharing target of the profile image based on account information. For example, when the user changes the profile image of the user account into a selected image, the electronic device 101 may identify an application (e.g., the first to third applications 1701, 1702 and 1703) and a device (e.g., the first to third devices 1710, 1720 and 1730) belonging to the account information. The electronic device 101 may enable the identified application and device to change the profile image into the selected image.

In an example embodiment, the electronic device 101 may enable an application to connect an image connected to a profile image to a selected image, so the selected image is displayed in the profile image region of the application. In an example embodiment, the electronic device 101 may transmit a selected image to the server 406 as a profile image of a user account, so the profile image of the user account is changed.

In accordance with various embodiments, when a profile image of a user account is changed, the electronic device 101 may identify relation information by analyzing an image selected as the profile image so that the profile image is shared based on the relation information, as in the aforementioned embodiment.

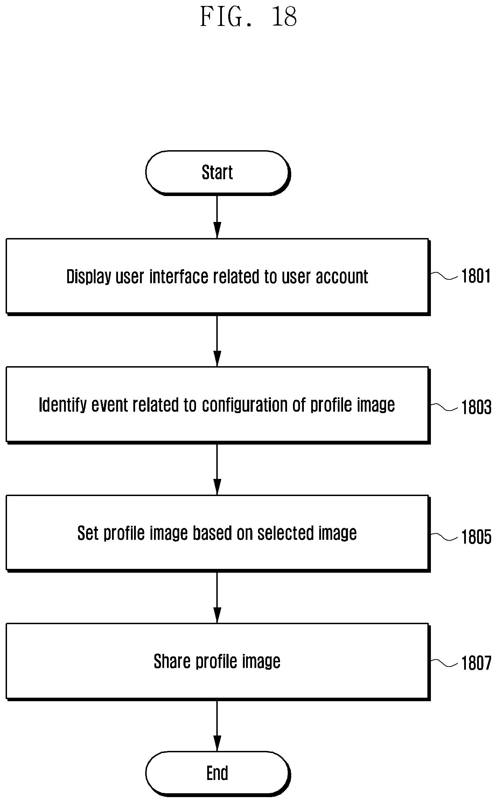

FIG. 18 is a flowchart illustrating an operation of sharing a profile image in the electronic device according to various embodiments.

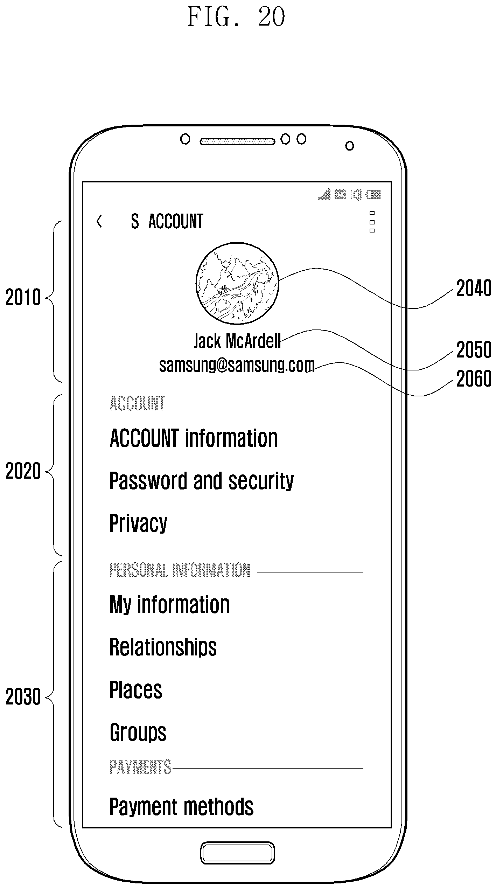

Referring to FIG. 18, at operation 1801, the processor 120 of the electronic device 101 may display a user interface related to a user account. For example, the processor 120 may display the user interface related to the user account on the display device 160 of the electronic device 101 in response to the detection of a menu entry request for the user account by a user. An example of a screen of a user interface related to a user account according to various embodiments is illustrated in FIG. 20.

At operation 1803, the processor 120 may identify an event related to the configuration of a profile image (or profile photo). For example, the processor 120 may identify a trigger for changing a profile image related to the user account. In an example embodiment, the processor 120 may receive a user input related to a change of a profile image through a region of the user interface in which the profile image is displayed. In an example embodiment, the processor 120 may receive the user input related to a change of the profile image in the state in which it has entered an editing mode for editing account information. In an example embodiment, the user input may include an operation of selecting a target image for a profile image (e.g., obtain an image from a gallery through image selection or photographing).

At operation 1805, the processor 120 may configure (set) a profile image of the user account based on a selected image.

At operation 1807, the processor 120 may share the profile image of the user account. For example, the processor 120 may identify a target for profile image sharing in response to a change of the profile image of the user account. In an example embodiment, the target for profile image sharing may include at least one application managed based on a user account within the electronic device 101 and capable of profile image registration and at least one different device grouped based on the user account. In an example embodiment, the processor 120 may share the selected image (or profile image) with the identified target, so a profile image related to the user account is changed.

In accordance with an embodiment, the processor 120 may connect an image, connected to a profile image of an application of the electronic device 101, to a selected image, so the selected image is displayed in the profile image region of the application. In accordance with an embodiment, the processor 120 may transmit the selected image to the server 406 as a profile image of the user account, so a profile image of another device of the user account is changed. In accordance with various embodiments, when a profile image of a user account is changed, the processor 120 may identify relation information by analyzing an image selected as the profile image so that the profile image is shared based on the relation information, as in the aforementioned embodiment.

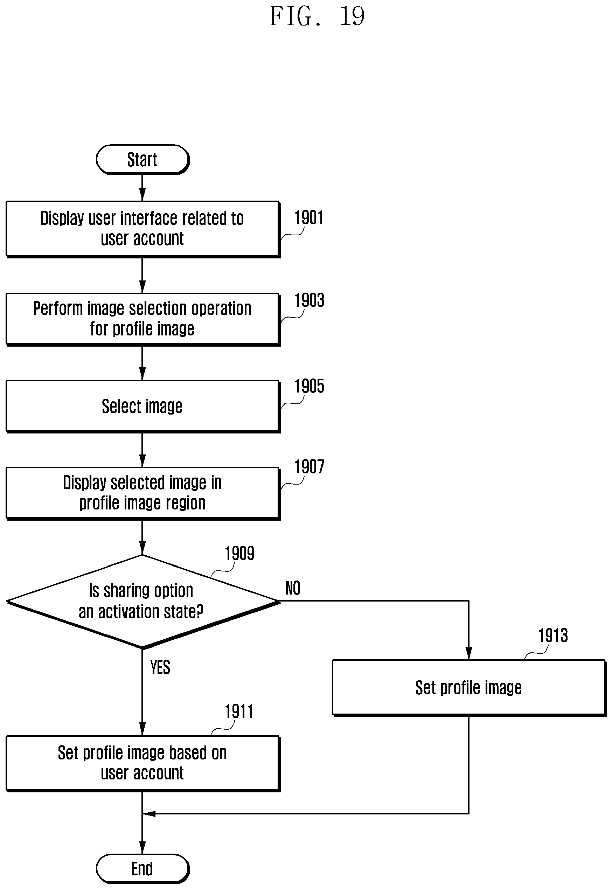

FIG. 19 is a flowchart illustrating an operation of sharing a profile image based on an account in the electronic device according to various embodiments.

Referring to FIG. 19, at operation 1901, the processor 120 of the electronic device 101 may display a user interface related to a user account. For example, the processor 120 may display the user interface related to the user account on the display device 160 of the electronic device 101 in response to the detection of a menu entry request for the user account from a user.

At operation 1903, the processor 120 of the electronic device 101 may perform an image selection operation for a profile image of the user account. In accordance with an embodiment, the processor 120 may receive a user input, such as the selection of a region in which a profile image is displayed in the user interface related to the user account or the selection of a change of a profile image in an account information configuration. The processor 120 may display an image on the display device 160 by executing a configuration mode (or a mode according to a user request) for executing image selection in response to a user input. In accordance with an embodiment, the processor 120 may display a list of images stored in the electronic device 101 by executing a gallery. In accordance with an embodiment, the processor 120 may obtain images (e.g., a selfie image) related to the user from the gallery and display the obtained images, or may obtain the best photo from the gallery and display the obtained photo. In accordance with an embodiment, the processor 120 may display the user's image (e.g., a selfie image) (e.g., display a preview) by executing a front camera (e.g., by executing a selfie photographing mode).

At operation 1905, the processor 120 may receive an image for a preview image. For example, the processor 120 may identify a selected image as a preview image in response to the selection of the image displayed on the display device 160. In an example embodiment, the processor 120 may identify a corresponding selected image as a preview image when a selfie image is selected in the gallery, an obtained best photo is selected, or a selfie image is captured (or obtained) in a photographing mode.

At operation 1907, the processor 120 may display the selected image in the profile image region of the user interface. In accordance with an embodiment, the processor 120 may change (or substitute) a preview image previously displayed in the profile image region of the user interface into (or with) the selected image, and may display the selected image. In an example embodiment, the processor 120 may change a screen related to an operation of selecting an image into a screen of the user interface in response to image selection, and may display a profile image related to the selected image in the screen of the user interface.

At operation 1909, the processor 120 may check whether a sharing option is an activation state. For example, the processor 120 may check whether a function of automatically sharing (or synchronizing) a profile image according to a user account based on an account is an activation (or function on) state or a deactivation (or function off) state. In accordance with various embodiments, the sharing option may be configured in the electronic device 101 (or as account information of a user account) by a user.

At operation 1909, if it is checked that the sharing option is the activation state (Yes at operation 1909), the processor 120 may perform an operation of configuring (or sharing) a profile image based on the user account at operation 1911.

In accordance with an embodiment, the processor 120 may identify a target for profile image sharing in response to a change of a profile image of the user account. In an example embodiment, the target for profile image sharing may include at least one application managed based on a user account within the electronic device 101 and capable of profile image registration and at least one different device grouped based on the user account. The processor 120 may share a selected image (or profile image) with the identified target (e.g., an application and device registered with the user account), so a profile image related to the user account is changed. For example, the processor 120 may connect an image, connected to a profile image of an application of the electronic device 101, to the selected image, so the selected image is displayed in the profile image region of the application. For example, the processor 120 may transmit the selected image to the server 406 as a profile image of the user account, so a profile image of another device of the user account is changed.

At operation 1909, if it is checked that the sharing option is the deactivation state (No at operation 1909), the processor 120 may configure the profile image within the user account at operation 1913. For example, the processor 120 does not share an image displayed in a profile image display region with an application and device belonging to (managed by) the user account, but may configure the image only as a corresponding profile image of the user account in the electronic device 101.

FIG. 20 is a diagram illustrating an example of a screen of a user interface related to a user account in the electronic device according to various embodiments.

In various embodiments, FIG. 20 illustrates an example of a screen of a user interface related to a user account open by a user through the electronic device 101.

Referring to FIG. 20, the user interface according to various embodiments may include a profile region 2010, an account management region 2020 and a service region 2030, for example.

In an example embodiment, the profile region 2010 may be a region in which outline information about a user account open by a user is displayed. For example, the profile region 2010 may include information regarding a profile image (or an object corresponding to an image) 2040 configured in a user account, a user name 2050 (e.g., Jack McArdell), and an account (e.g., an account ID, for example, e-mail or a telephone number) 2060 open by a user.

In an example embodiment, the account management region 2020 may be a region for the management of a user account. For example, the account management region 2020 may include an account information menu capable of configuring or managing detailed information on a user account, a password and security menu for a configuration or management regarding the password and security of the user account, and a privacy menu for a configuration or management regarding a user. A user may confirm or edit detailed information in a related menu through corresponding menu selection (e.g., a touch).

In an example embodiment, the service region 2030 may be a region in which information regarding various services available based on a user account can be configured or identified. In accordance with an embodiment, the service region 2030 may include a personal service menu (e.g., personal information) in which additional information related to a user may be configured, an application menu in which a user account may be registered and an application (e.g., a payments application, a health application, a cloud application, a mail application or a calendar application) included in a corresponding user account may be configured (e.g., edited or deleted) or identified, and a device menu in which information regarding a device belonging to other devices used by a user and grouped based on a user account may be confirmed or another device may be configured (e.g., edited or deleted) in a user account. In an example embodiment, although not shown in FIG. 20, the user interface may further include contents not illustrated in FIG. 20. The contents not illustrated may be displayed on a screen through the scroll of a user.

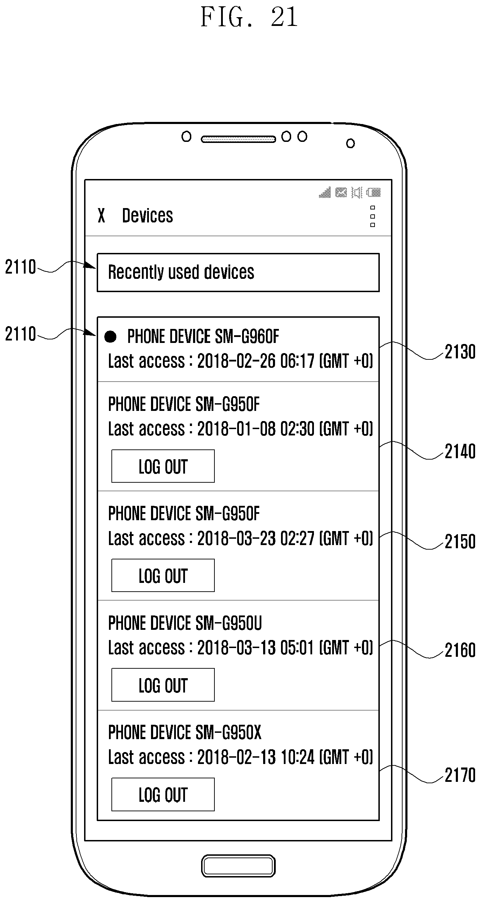

FIG. 21 is a diagram illustrating an example of a screen of the user interface related to a user account in the electronic device according to various embodiments.

FIG. 21 illustrates an example of a screen of a user interface when the device menu for managing a device related to a user account is selected through the service region 2030 of the user interface illustrated in FIG. 20.

Referring to FIG. 21, the user interface according to various embodiments may display information regarding at least one device (e.g., recently used devices that have logged on to (or accessed) a user account) grouped based on the same user account as the user account of the electronic device 101.

In accordance with an embodiment, the user interface may include a title region 2110 (e.g., "Recently used devices") for indicating the type of content now displayed in the user interface and a device region 2120 for indicating state information regarding devices belonging to a user account. In an example embodiment, the state information may include information, such as a device type, a device name, the last login (or access) date, and a current login (or access) state.

In an example embodiment, FIG. 21 illustrated an example in which five devices are managed (e.g., grouped or registered) based on a user account, and may show that pieces of state information of the five devices are divided into respective regions 2130, 2140, 2150. 2160 and 2170. In FIG. 21, the device displayed in the first region 2130 may be the state in which it is now logged on to (or accesses) the user account. The devices displayed in the second region 2140, the third region 2150, the fourth region 2160 and the fifth region 2170 may be the state in which they are now logged out (or not accessed) from (or to) the user account.

Various embodiments of the present disclosure disclosed herein and the drawings propose only examples in order to easily describe the contents of the present disclosure and to aid in understanding of the present disclosure, and are not intended to restrict the scope of the present disclosure. Accordingly, all of modifications or variations derived based on the technical spirit of the present disclosure should be understood as being included in the scope of the present disclosure in addition to the disclosed embodiments.

## Claims

1. An electronic device, comprising:
a display;
a communication module comprising communication circuitry;
memory; and
a processor configured to:
identify a trigger related to a change of a profile image,
select an image for the profile image,
identify at least one target object for sharing of the selected image as a profile image of the electronic device based on sharing information, and
share the selected image with the at least one target object as a profile image of a user of the electronic device.

2. The electronic device of claim 1, wherein the sharing information comprises relation information of a contact list of the electronic device and an account of the user of the electronic device.

3. The electronic device of claim 2, wherein the processor is configured to:
identify the relation information based on the selected image,
identify at least one member corresponding to the relation information using the contact list, and
share the selected image with an external device corresponding to the identified at least one member as the profile image of the electronic device.

4. The electronic device of claim 3, wherein the processor is configured to:
recognize at least one face object included in the selected image,
identify a member corresponding to a face object in the contact list, and
identify the relation information of a relation between the member and the user of the electronic device in the contact list.

5. The electronic device of claim 4, wherein the processor is configured to:
analyze at least one object in the selected image,
identify a member corresponding to the analyzed at least one object in the contact list, and
identify the identified member or members of a group to which the member as a sharing target member for the sharing of the profile image.

6. The electronic device of claim 2, wherein the processor is configured to:
identify a target for the sharing of the profile image based on the account in response to a selection of an image for a profile image of the account, and
change a profile image of the identified at least one target into the selected image,
wherein the target for the sharing of the profile image comprises at least one application and at least one device included in the user account.

7. The electronic device of claim 6, wherein the processor is configured to:
determine whether a sharing option of automatically sharing a profile image of the account based on an account is an activation state or a deactivation state,
change the profile image of the account by sharing the selected image with the at least one application and the at least one device in response to the activation state of the sharing option, and
change the profile image of the account of the electronic device to the selected image in response to the deactivation state of the sharing option.

8. The electronic device of claim 2, wherein the processor is configured to:
receive an image from an external device,
receive a request to change a profile image related to the external device using the image,
determine a configuration state of the profile image related to the external device in the contact list of the electronic device in response to receiving the request, and
set the received image as the profile image related to the external device in response to a non-configuration state of the profile image.

9. The electronic device of claim 8, wherein the processor is configured to:
identify an option of automatically changing the profile image related to the external device,
set the profile image of the external device based on the received image in response to an activation state of the option, and
maintain the profile image of the external device without any change in response to a deactivation state of the option.

10. A method of operating an electronic device, comprising:
identifying a trigger related to a change of a profile image,
selecting an image for the profile image,
identifying at least one target object for sharing of the selected image as a profile image of the electronic device based on sharing information, and
sharing the selected image with the at least one target object as a profile image of a user of the electronic device.

11. The method of claim 10, wherein the sharing information comprises relation information of a contact list of the electronic device and an account of the user of the electronic device.

12. The method of claim 11, wherein the identifying of the target object comprises:
identifying the relation information based on the selected image,
identifying at least one member corresponding to the relation information using the contact list, and
sharing the selected image with an external device corresponding to the identified at least one member as the profile image of the electronic device.

13. The method of claim 12, wherein the identifying of the relation information comprises:
recognizing at least one face object included in the selected image,
identifying a member corresponding to a face object in the contact list, and
identifying the relation information of a relation between the member and the user of the electronic device in the contact list.

14. The method of claim 11, wherein:
the identifying of the at least one target object comprises identifying a target for the sharing of the profile image based on the account in response to a selection of an image for a profile image of the account, and
the target for the sharing of the profile image comprises at least one application and at least one device included in the account.

15. The method of claim 11, further comprising:
receiving an image from an external device and receiving a request to change a profile image of the external device using the image,
determining a configuration state of the profile image related to the external device in the contact list of the electronic device in response to the reception of the request,
configuring the received image as the profile image of the external device in response to a non-configuration state of the profile image,
determining an option of automatically changing a profile image of the external device in response to a configuration state of the profile image, and
configuring the profile image of the external device based on the received image in response to an activation state of the option.
